# EUROPEAN PATENT SPECIFICATION

(11) **EP 3 728 907 B1**
(45) Date of publication and mention of the grant of the patent: **13.10.2021**
(21) Application number: 18830212.9
(22) Date of filing: 17.12.2018
(51) Int. Cl.: F16H 63/46, F16D 43/30, F16D 43/18

(54) **HIGH PERFORMANCE SYNCHRONOUS TRANSMISSION**
HOCHLEISTUNGSFÄHIGES SYNCHRONGETRIEBE
TRANSMISSION SYNCHRONE À HAUT RENDEMENT

(30) Priority: 19.12.2017 IT 201700146463
(43) Date of publication of application: 28.10.2020
(73) Proprietor: Piaggio & C. S.P.A., 56025 Pontedera Pisa (IT)
(72) Inventor: NUTI, Luca, 56025 Pontedera (PI) (IT); MARIOTTI, Walter, 56025 Pontedera (PI) (IT)
(74) Representative: Mannucci, Michele
(86) International application number: PCT/EP2018/085331
(87) International publication number: WO 2019/121579

(56) References cited:
- EP-A1- 2 151 607
- EP-A2- 1 939 504
- US-A- 2 034 988
- US-A- 4 505 352
- US-A1- 2007 074 593
- US-A1- 2015 033 887

## Description

The present invention relates to a high performance transmission, in particular to be used aboard a motorcycle, such as a scooter, as element for transmitting the motion generated by a motor to a driving wheel, in particular the rear wheel of the motorcycle.

The synchronous transmission can be automatic or semiautomatic. Under automatic transmission a transmission is meant wherein the speed is managed in several distinct transmission ratios, and the passage from a ratio to the other one is performed based upon a pre-set logic, which in case can be selected by the driver among some available logics, studied to adapt to more or less specific driving conditions.

On the contrary, under semiautomatic clutch a clutch is meant wherein the speed shift control can be given manually and it is actuated by means of a specific actuator, or it can be given by a control unit, based upon a control logic set in such unit, with in case variable actuation parameters to change driving style or to satisfy other operating needs.

In the later generation scooters, the most commonly used transmission is of CVT *(Continuously variable transmission)* type, known as continuous transmission or continuous variator.

It has the advantage of either providing a continuous traction and not requiring the manual actuation of the different ratios. However, by using elements of sliding type, such transmission is characterized by a low performance, above all in the transitory procedures when the hysteresis effect of the transmission belt is maximum.

This pushes downwards the general performance of the vehicle and increases the consumption thereof.

On the other hand, a much felt need in the field is that of limiting the consumption as much as possible, however maintaining, whenever requested by the market, the comfort level thereto the users got used by the CVT gearbox.

US 4 505 352 A discloses a transmission for motorcycle comprising a centrifugal starting clutch. EP 2 151 607 A describes a transmission for motorcycle comprising one centrifugal clutch for each gear ratio. US 2 034 988 A discloses another example of transmission with multiple centrifugal clutches, wherein three centrifugal clutches are mounted on the input shaft.

The object underlying the present invention is then to increase considerably the overall performance of the transmission in two-wheel vehicles for urban transport. However, in the design of a transmission for scooters and the like, there is a base constraint which consists in that the crankshaft, which receives the motion from the piston in the cylinder, and the hub shaft, which transmits at the end of the transmission kinematic chain the motion to the rear wheel, are parallel therebetween and they are arranged at a distance depending from the engine position.

If, with a transmission of CVT type, these two shafts are substantially connected by a belt extending between two pulleys kinematically connected to such shafts by filling-in the distance therebetween, this scheme is not easy to be applied in case of a synchronous transmission, which uses a plurality of toothed wheels engaged therebetween with different transmission ratios, but with the constraint that they cannot be placed all side-by-side.

Moreover, another inherent difficulty in a synchronous transmission is the need for having an automatic gearbox, according to the operating condition of the vehicle. In fact, it is necessary to implement increasing or decreasing shifts without producing wrenches, jerks and abrupt slowing-down, with maximum running graduality and mildness.

Considering the problem of providing a transmission of the above mentioned type, the solution consists in optimizing the performance of the transmission itself, which could use a synchronous belt between two toothed pulleys or in case another synchronous system, for example a pinion - chain - toothed wheel system, and however a high performance system, for transmitting the motion between crankshaft and hub shaft, with fixed transmission ratio, instead of the CVT belt with variable transmission ratio, and a mechanical gearbox which, with a predefined number of ratios, replaces the ratio variations obtained by the pulleys of a CVT.

In particular, this new type of transmission has the problem of having a centrifugal clutch system for automatically engaging the first speed above a certain engine rotation regime, but such clutch should not disengage if the rotation regime of the crankshaft decreases below a predetermined value in second or higher speed, in order to avoid an irritating running discontinuity and the need for keeping the engine running at high regime in speeds higher than the first one.

Therefore, the above-mentioned problem is solved by high performance synchronous transmission as specified above as defined in the enclosed claim 1.

The main advantage of the high-performance transmission according to the present invention lies in the fact that the proposed double centrifugal clutch systems acts only to engage the first speed and it disengages only in first speed, below a certain rotation regime, but it remains engaged below that regime in the higher speeds.

In particular, the transmission according to the invention, on the crankshaft, comprises a double centrifugal clutch constituted by a first centrifugal clutch and a second centrifugal clutch associated in a clutch element.

The first centrifugal clutch is arranged on the crankshaft in so as to engage in said clutch element upon reaching or exceeding a first rotation regime N₁ of the crankshaft, whereas the second centrifugal clutch is arranged on the crankshaft in so as to engage in said clutch element upon reaching or exceeding a second rotation regime N₂ of the crankshaft.

It is to be meant that the second rotation regime N₂ has a smaller number of revolutions than the first rotation regime N₁.

Indicatively, the first rotation regime N₁ for example is equal to 4000 or 4500 revolutions per minute, values thereamong it can be comprised. The second rotation regime N₂ could be equal to 2000 or 2500 revolutions per minute, values thereamong it can be comprised.

The operation of the two above-mentioned centrifugal clutches is adjusted by a selection group which comprises at least a locking element and which results to be configured to pass selectively between:
- a first configuration wherein said locking element is engaged with said second centrifugal clutch so as to lock radially said second centrifugal clutch, by preventing the same from engaging said clutch element, and
- a second configuration wherein said locking element is disengaged from said second centrifugal clutch so as to allow the operation of the same.

The passage from the first configuration to the second configuration takes place as feedback to a control signal, in case in function of the number of engine revolutions and/or speed.

In a preferred version of the invention, the above-mentioned clutch element comprises a first and a second housing, advantageously assembled into one another.

This solution can be implemented both within an automatic transmission and a transmission with semiautomatic clutch, as it will be described based upon two distinct embodiment examples.

Therefore, the present invention will be described hereinafter according to two preferred embodiment examples, provided by way of example and not for limitative purposes by referring to the enclosed drawings, wherein:
- figure 1 shows a side elevational view of a scooter incorporating a transmission according to the present invention;
- figure 2 shows a perspective view of a transmission of figure 1, closed in its container, and of the related engine block;
- figure 3 shows a front view of a first embodiment example of a high performance synchronous transmission, of automatic type, according to the present invention, without outer casing;
- figure 4A shows a perspective top view and a view in flat longitudinal section of the transmission of figure 3;
- figure 4B shows a top plan view of the transmission of figure 3;
- figure 4C shows a perspective rear view of the transmission of figure 3;
- figures 5A and 5B show respective plan and cross section views of a first detail of the transmission of figure 3 in two different operating configurations;
- figures 6A and 6B show respective front and rear perspective views of a portion of the first detail of figures 5A and 5B, illustrating a double clutch of centrifugal type used both in the present transmission example and in the subsequent example, relating to a semiautomatic transmission;
- figures 7A and 7B show respective front and rear perspective views in partial section of the portion of figures 6A and 6B;
- figure 8 shows an exploded perspective view of the portion of figures 6A and 6B;
- figure 9 shows a perspective view of some components of the first detail of figure 7;
- figure 10 shows a front and perspective view in partial section of a third detail of the transmission of figure 3, used both in the present transmission example and in the subsequent example, relating to a semiautomatic transmission;
- figure 10A shows a connecting scheme to combine the details of the previous figures;
- figure 11 shows a top perspective partial view and a view in flat longitudinal section of the transmission of figure 3, that is of the right side thereof;
- figure 12 shows a perspective view in section of a fourth detail of the transmission of figure 3, used both in the present transmission example and in the subsequent example, relating to a semiautomatic transmission;
- figures 13A and 13B show a perspective view and another perspective view in partial section of a fifth detail of the transmission of figure 3, respectively, used both in the present transmission example and in the subsequent example, relating to a semiautomatic transmission;
- figure 14A shows several schemes for actuating the transmission of figure 3, according to some variants thereof, used both in the present transmission example and in the subsequent example, relating to a semiautomatic transmission;
- figure 14B shows an operating diagram describing the behaviour of some portions of the fifth detail of figures 13A and 13 B;
- figures 14C and 14D show a perspective view and a side view of a component of the fifth detail of figures 13A and 13B otherwise not visible in such figures, respectively;
- figure 15 shows a top perspective partial view and a view in flat longitudinal section of the transmission of figure 3, that is of the left side thereof;

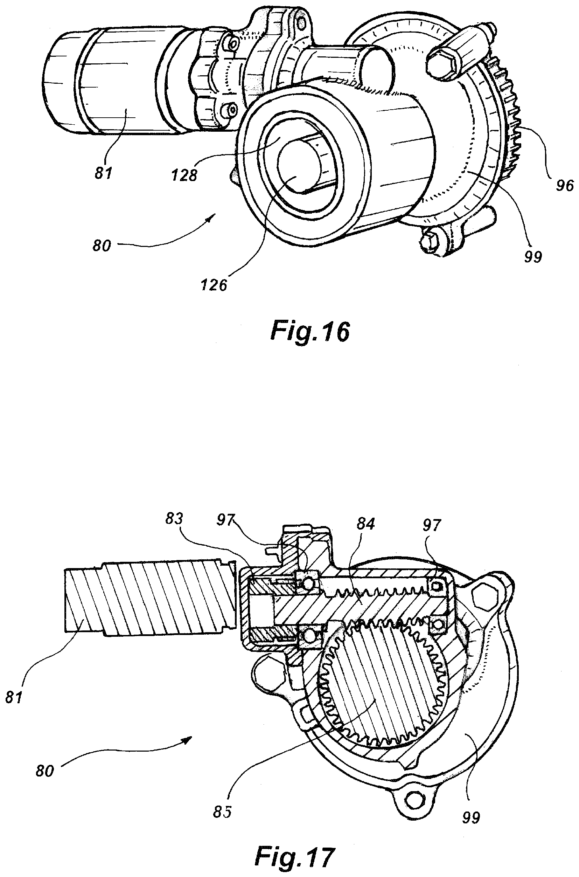

- figure 16 shows a perspective view of a sixth detail of the transmission of figure 3, used both in the present transmission example and in the subsequent example, relating to a semiautomatic transmission;
- figure 17 shows a first perspective view in section of the sixth detail of figure 16;
- figure 18 shows a second perspective view in section of the sixth detail of figure 16;

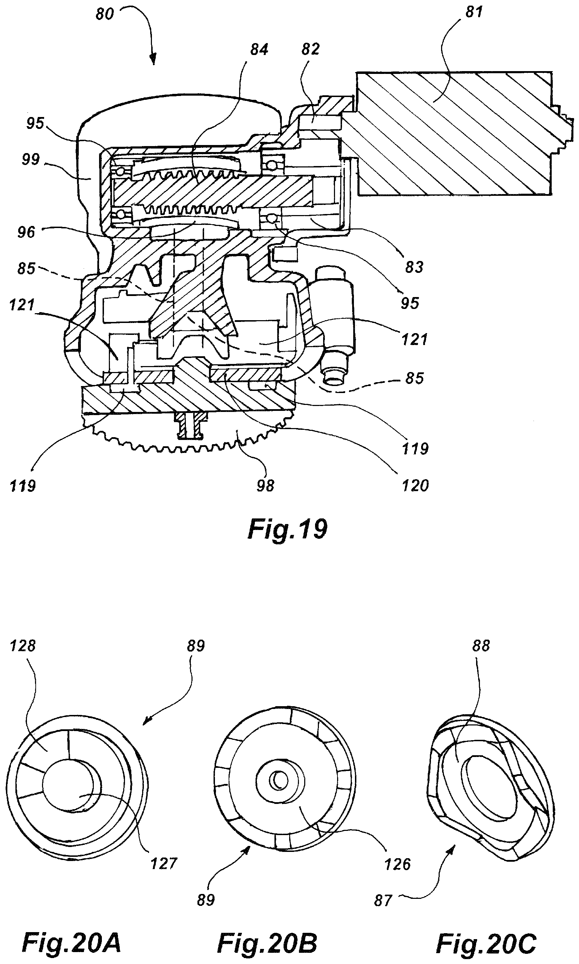

- figure 19 shows a third perspective view in section of the sixth detail of figure 16;
- figures 20A, 20B and 20C show respective perspective views of some components of the sixth detail of figure 16, in particular figures 20A and 20B show respective sides of the same component;
- figure 21 shows a schematic view of an additional component of the sixth detail of figure 16;
- figure 22 illustrates the operation of said sixth detail of figure 16 in relation to the component of figure 21;
- figure 23 shows a perspective view of a seventh detail of the transmission of figure 3, used both in the present transmission example and in the subsequent example, relating to a semiautomatic transmission;
- figure 24 shows a section view of the seventh detail of figure 20;
- figure 25 shows a front view of a second embodiment example of a high performance synchronous transmission, of semiautomatic type, according to the present invention, without outer casing in figure 2;
- figure 26A shows a front view of a detail of the synchronous transmission of figure 25, in particular actuator;
- figure 26B shows a view in longitudinal section of the actuator of figure 26A;
- figure 26C shows a perspective view of the actuator of figure 26A;

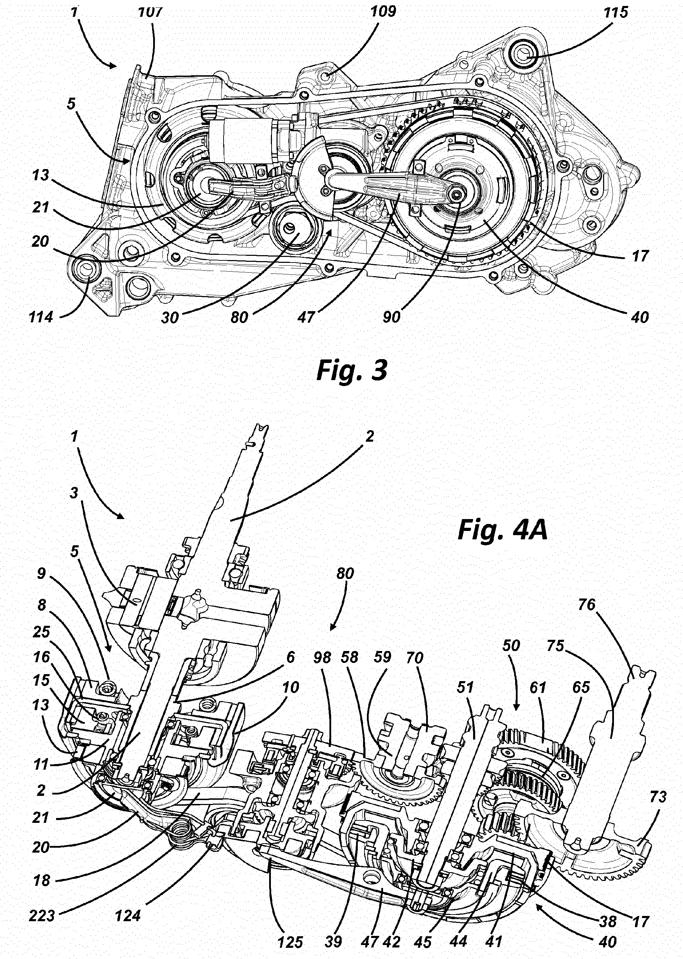

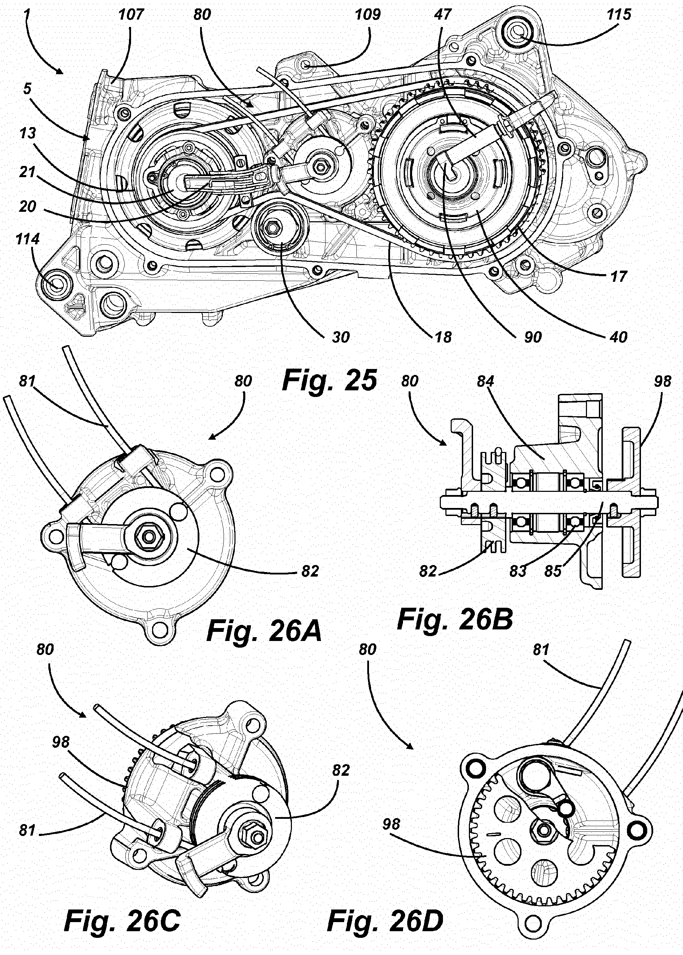

- figure 3D shows a view in partial cross section from the rear portion of the actuator of figure 26A;

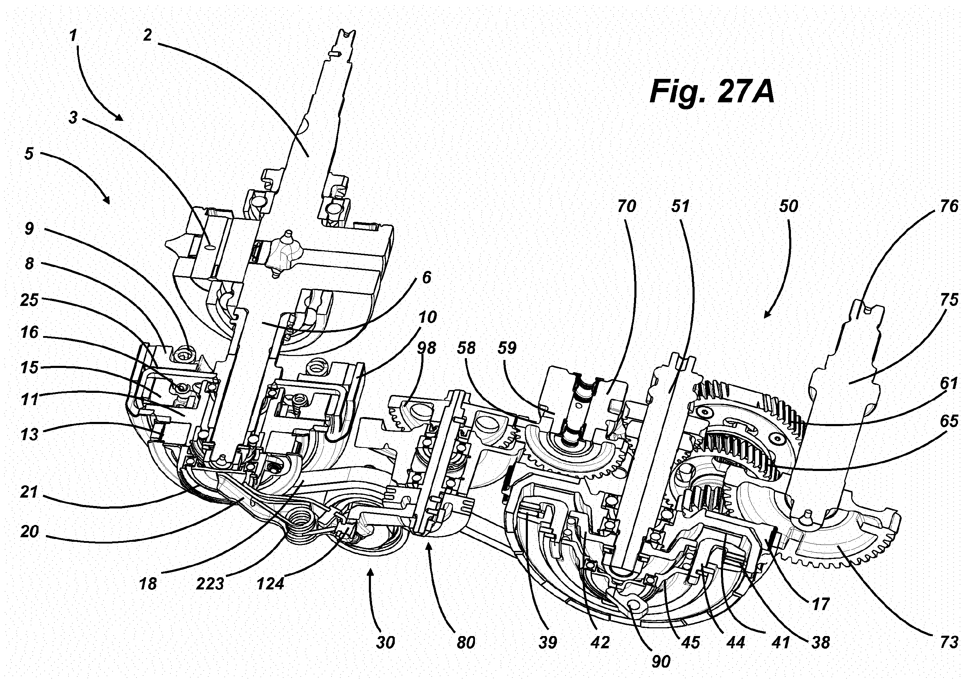

- figure 27A shows a perspective top view and a view in flat longitudinal section of the semiautomatic transmission of figure 25;

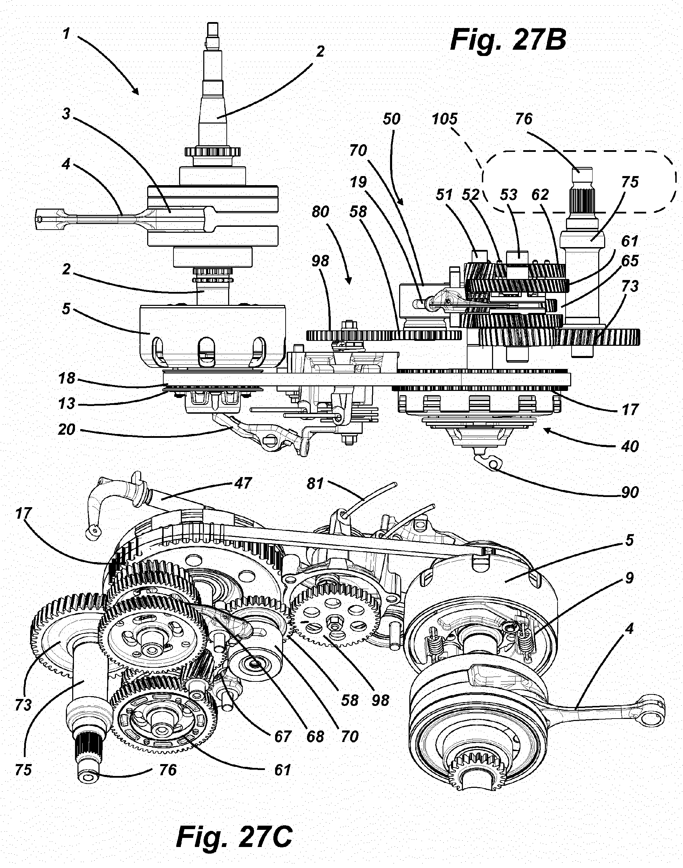

- figure 27B shows a top plan view of the transmission of figure 25;
- figure 27C shows a perspective rear view of the transmission of figure 25;

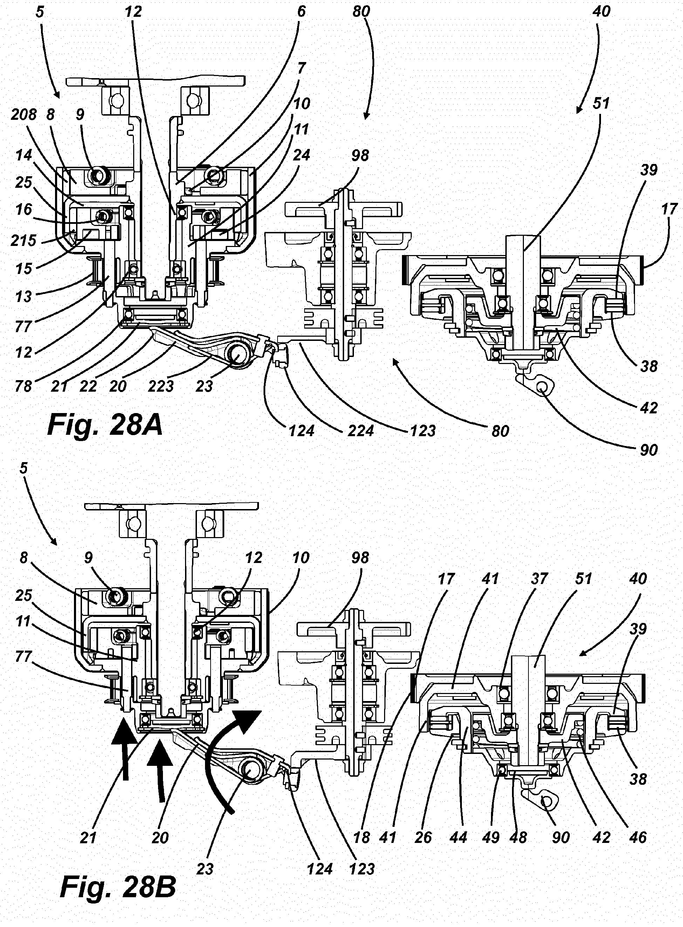

- figures 28A and 28B show respective plan and cross section views of a first detail of the semiautomatic transmission of figure 25 in two different operating configurations; e

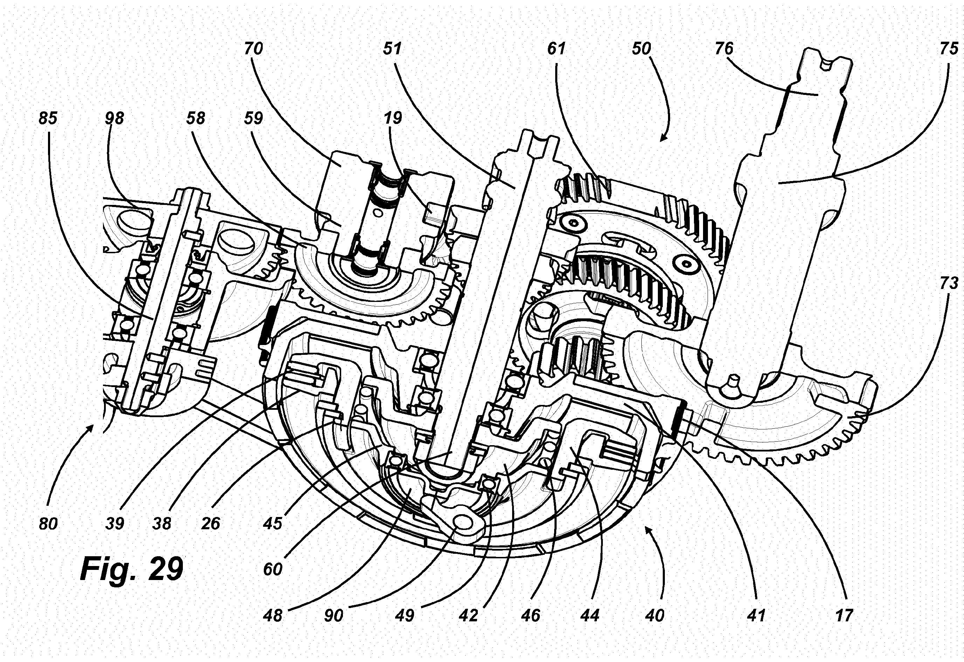

- figure 29 shows a top perspective partial view and a view in flat longitudinal section of the semiautomatic transmission of figure 25, that is of the right side thereof.

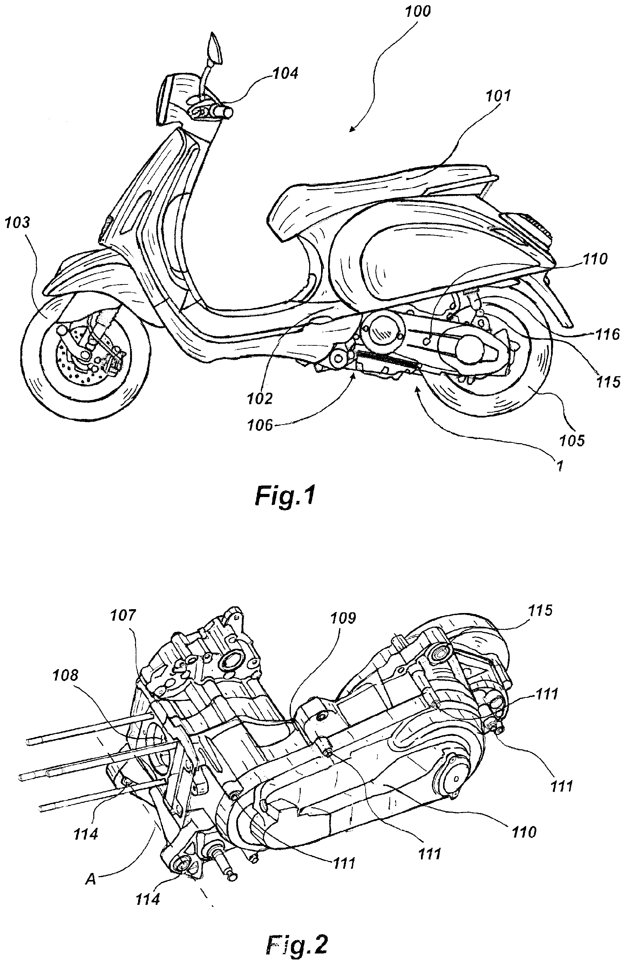

By referring to figures 1 and 2, a motorcycle, and in particular a scooter, is designated as a whole with 100. The invention relates to the field of the vehicles with a saddle, or straddle vehicles which are driven astride, generally, with two, three or four wheels, with particular reference to the scooters having a propulsion unit arranged in a position under a saddle 101, inside a chassis 102, which herein is represented laterally, extending from a front wheel 103, controlled by handlebar 104 to a driving rear wheel 105.

The propulsion unit 106 (figure 2) or, briefly, the engine is of the type having one or more cylinders arranged in a position approximately tilted on the median plane of the vehicle corresponding to the rotation plane of the two wheels during the forward rectilinear running.

The engine 106 has an engine block 107 in one single piece which receives, in the present embodiment example, a cylinder 108 and a related (not shown) piston.

The piston acting in said cylinder 108 is connected to a crankshaft 2 positioned transversally and perpendicularly to said median plane. On a represented side (figures 1 and 2) of the scooter 100 a transmission device 1 or, more briefly, a transmission of the motion from the crankshaft to the hub of the rear wheel 105 is provided.

The herein described transmission is of the synchronous or nearly synchronous type, and it uses a pair of pulleys kinematically connected by an annular belt, preferably a toothed belt on toothed pulleys or a high performance belt, for example of the Stretch Fit^{®} type or the like.

It is to be meant that what described hereinafter can be applied wholly or partially even to an equivalent synchronous transmission of other type, for example a pinion - chain - toothed wheel transmission.

By referring to the present example, the transmission 1 has a container 109 which receives inside the transmission elements which will be described hereinafter with greater details. The container 109 is connected to the engine block 107 by creating a tunnel-like casing containing the crankshaft 2 and all transmission elements connected thereto.

Moreover, the container 109, on the exposed side of the motorcycle 100, is closed by a cover 110 of the transmission 1, substantially extending from the engine 106 to the hub shaft 75 of the driving wheel 105. The cover 110 is fastened to the container 109 by means of suitable bolts 111. Openings, slits, air intakes for accessing and/or cooling down the transmission elements through said cover 110 could be provided.

The cover 110 is rested upon a fastening edge 112 of the container 109, equipped with fastening seats 113 for said bolts 111. The container 109 further has a seat of front connection 114, with a hinge connection of axis A to allow the engine block 107 and the transmission 1 to oscillate with respect to the body of the scooter 100. Moreover, the container also comprises a seat of rear connection 115, meant to be connected to a rear suspension 116. In this way, the container 109 and the whole transmission 1 are connected to the vehicle 100.

By referring in particular to figures 3 to 5B, the transmission included in the container 109 is of automatic type, with several speeds and of synchronous type 1, and it is arranged for connecting the crankshaft 2, which receives the motion from the movement of one or more pistons, to the hub shaft 75, by considering that these two shafts are parallel therebetween and placed at a prefixed distance. The hub shaft 75, at one distal end thereof, is equipped with a pinion 76 connecting to the rear wheel 105.

They are both perpendicular to the median plane of the vehicle, defined by the rotation plane of the front and rear wheels. It is further to be meant that the use of this type of transmission is not limited to the herein represented two-wheel scooter, but it can be extended to a scooter with a pair of front wheels or to a scooter with four wheels.

By referring to figure 3 and to the subsequent figures, the automatic transmission according to a first embodiment example is herein designated as a whole with 1 and it comprises a crankshaft 2 comprising a crank 3 thereto a connecting rod 4 is connected which receives the motion by a not represented piston; however, it is to be meant that such transmission could be applied even to several-cylinder engines.

The crankshaft 2 extends from both sides of the crank: in the direction opposite to the transmission the crankshaft will be connected, by way of example, to an electric engine-generator, in case but not exclusively for an operation of hybrid type, and to a cooling valve.

In the direction of the transmission, the crankshaft comprises a clutch set comprising a clutch element implemented by a starting double centrifugal clutch system, designated as a whole with 5, which is useful to manage the starting of the vehicle from standstill.

The system 5 is configured like a cascade double centrifugal clutch, with interconnected elements and thus it has a first clutch and a second clutch, both of centrifugal type.

In other words, and in simplified terms, it is possible to imagine the system 5 as constituted by two centrifugal clutches assembled into one another and acting independently: each clutch is disconnected, in its operation, from the other one and its own activation upon exceeding a certain regime is constrained, like any other centrifugal clutch, by the rotation regime predetermined during the planning phase.

Therefore, the above-mentioned double centrifugal clutch is substantially constituted by a first centrifugal clutch and a second centrifugal clutch associated in un clutch element which, as it will appear clear in details hereinafter, comprises a first and second housing, advantageously assembled into one another.

The first centrifugal clutch is arranged on the crankshaft 2 so as to engage in said clutch element upon reaching or exceeding a first rotation regime N₁ of the crankshaft 2, whereas the second centrifugal clutch is arranged on the crankshaft 2 so as to engage in said clutch element upon reaching or exceeding a second rotation regime N₂ of the crankshaft.

It is to be meant that the second rotation regime N₂ has a number of revolutions smaller than the first rotation regime N₁.

Indicatively, the first rotation regime N₁ is equal for example to 4000 or 4500 revolutions per minute, values thereamong it can be comprised. The second rotation regime N₂ could be equal to 2000 or 2500 revolutions per minute, values thereamong it can be comprised.

The operation of the two above-mentioned centrifugal clutches is adjusted by a selection set which comprises at least a locking element and which results to be configured to pass selectively from:
- a first configuration wherein said locking element is engaged with said second centrifugal clutch so as to lock radially said second centrifugal clutch, by preventing the same to engage said clutch element, to
- a second configuration wherein said locking element is disengaged from said second centrifugal clutch so as to allow the operation of the same.

The passage between the first configuration and the second configuration takes place as feedback to a control signal, in case depending upon the number of engine revolutions and/or speed, as it will be described hereinafter.

In detail, each clutch has a respective first outer clutch housing 10 and a second inner clutch housing 25, the respective clutch elements acting on each one thereof; the second clutch housing 25 is inside the first clutch housing 10 and thus it is smaller, whereas the first housing 10 is larger and it includes both sets of the respective centrifugal masses.

The two clutch housings 10, 25 are integral one another: the rotation of the second housing 25 determines the dragging of the first housing 10 and vice versa.

In order to guarantee the correct functionality of the system, the centrifugal masses of the two clutches are suitably sized so that they act at rotation regimes significantly different according to the criterium which will be illustrated hereinafter.

This solution is devised to have a connecting regime of the engine in the starting phase (first speed) different from the connecting/disconnecting regime in the other operating conditions (from the second speed on).

In order to guarantee suitable starting features, for example under difficult conditions: in case of full load and ascending road, it is necessary to have a quite high clutch connecting regime in first speed in terms of regime. Besides, if one wishes to obtain a reduced consumption under stationary conditions, for example with constant speed on flat road by driving from the second speed on and by considering that the first speed is used only for starting, it is suitable to provide a quite low engine minimum connecting regime, to allow the vehicle running with low regimes.

On this regard, the double clutch system 5 is put in rotation by the crankshaft 2 by means of a small hub 6 of the shaft connecting it to a first mass-bearing plate 7 connected thereto, which drags in rotation two first clutch masses 8 which tend to move away therebetween due to the centrifugal force acting thereon, in opposition to first clutch springs 9.

Once reached the defined rotation regime, the first clutch masses 8, through the friction material placed on the outer periphery thereof, transmit the motion to the first clutch housing 10, which includes the whole double clutch system 5. It is stiffly keyed on a bushing 11 which is axially movable and acts as locking system for the inner clutch, apart from providing for the motion transmission.

This bushing 11 is assembled on first clutch bearings 12 to guarantee the rotation between crankshaft 2 and housing 10 when the clutch is in the idle position.

Moreover, a driving pulley 13 is arranged on the bushing 11, this pulley surrounding the distal end thereof and which is stiffly keyed thereto.

The second clutch housing 25 includes a second mass-bearing plate 14 whereon second clutch masses 15 are assembled which tend to move away therebetween due to the effect of the centrifugal force acting thereof, in opposition to second clutch springs 16. The second housing 25 has its own cavity arranged in opposite direction with respect to the first housing 10, thus implementing a closed space therebetween which includes the sliding bushing 11 and the second clutch masses 15.

The bushing 11 comprises a pair of locking pins 77 dragged in rotation thereby; with the axial motion of the bushing 11, they interfere with a suitable slot 24 implemented in each second clutch mass 15, a slot suitably shaped to this purpose. With this interference, the second clutch masses 15 are prevented from moving in radial direction, due to the effect of the centrifugal force, and then, at last, from closing the inner clutch.

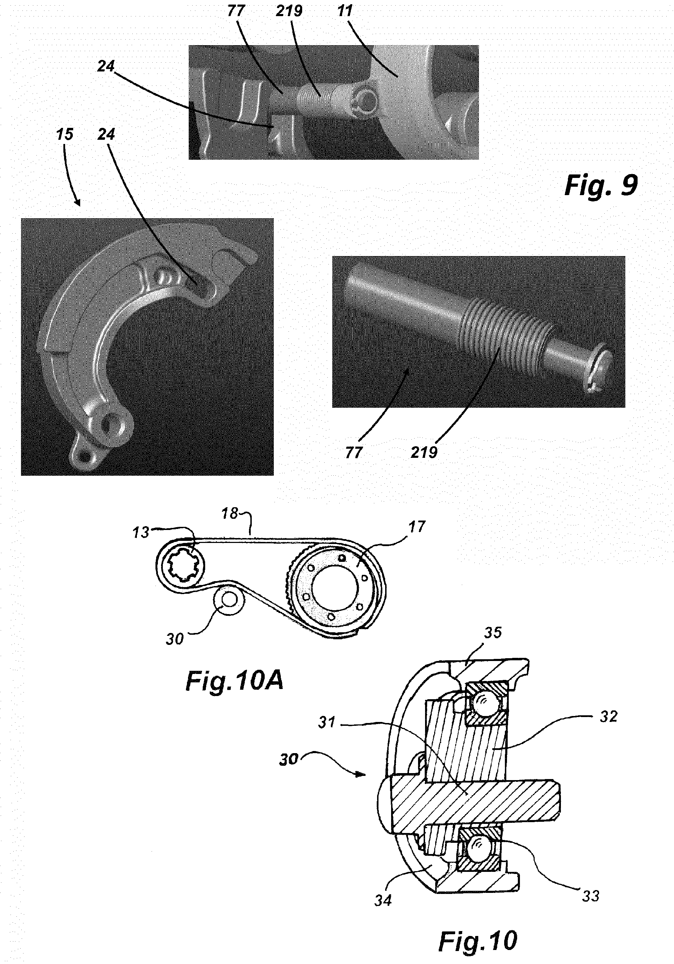

On each locking pin 77 there is a return spring 19 which, once disengaged the system, (from the second speed on), guarantees that the bushing 11 returns in a neutral position. Such springs 19 compress in the active phase, by making feedback on the surface of the driving pulley 13 and extend, as far as going back to the resting position, once the locking system actuation has stopped (Figure 9).

The actuation of the locking system with the bushing 11 takes place by acting in axial direction with suitable means, which will be described hereinafter, by acting on a control plate 21 of the double clutch system 5. It is assembled on a second clutch bearing 78, at the distal end of the crankshaft 2.

By inserting a system for locking the inner clutch, which acts only in first speed, there is the possibility of inhibiting the operation thereof, by allowing to obtain a high connecting regime during the starting phase. By deactivating then such system, for all speeds, except the first speed, there is the possibility of proceeding with very low gas at very low engine rotation regime.

In the herein provided solution the actuation set acting on the control plate 21, which will be described hereinafter, shifts a suitably shaped frontal cam which, in turn, acts on a control lever 20, put on the fulcrum of the transmission cover which, with suitable ratio of arms, transfers the motion to the above-mentioned system for locking the centrifugal clutch.

The control plate 21 acts as first actuation button or engagement button for the double clutch system 5.

The configuration is so that, when a pressure is not exerted on the control plate 21, the bushing 11 is pushed axially so as to allow the insertion of the locking pins 77 in the slot 24 of the second clutch masses 15, thus by preventing the second clutch housing 25 from being dragged thereby, although these masses, thanks to the elastic constant of the respective second clutch springs 16, can translate radially at a much lower regime than the connecting one of the first clutch housing 10 and of the first clutch masses 8.

In this way, the engagement of the first speed derives from the connecting regime provided for the first clutch housing 10 with the first clutch masses 8.

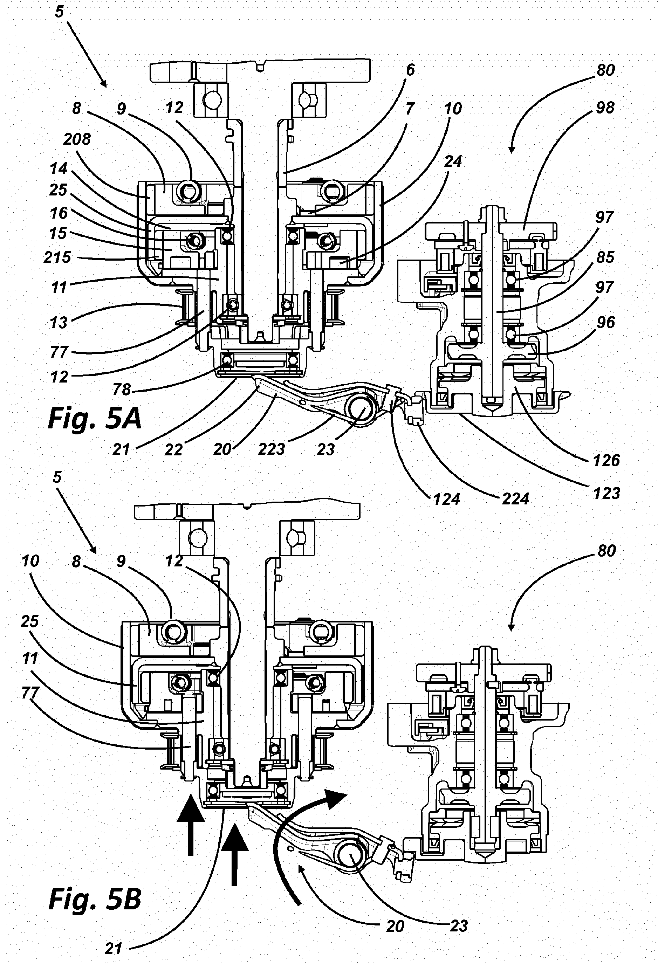

On the contrary, by leaving free the control plate 21 (figure 5A), the bushing 11 moves in opposite direction pushed by the return springs 19 assembled on the locking pins 77. In this way, a direct mechanical connection between the crankshaft 2, the second clutch housing 25, the bushing 11 and the driving pulley 13 is determined and, under such operating condition, the driving pulley 13 is dragged into rotation by the crankshaft 2 when the instantaneous regime exceeds the connecting regime determined by the second clutch masses 15 and by the respective second clutch springs 16.

This operating state, as it will appear clear hereinafter in the present description, corresponds to the second, third and fourth speed, that is any higher speed than the first speed, wherein one wishes that the driving pulley 13 transmits the motion to the driving wheel 105.

On the contrary, if the control plate 21 is pressed (figure 5B), a state is obtained which corresponds to the first speed or to the state of idle position, the outer centrifugal clutch, with the first clutch housing 10, by determining the passage from one to the other one and vice versa based upon the rotation regime of the crankshaft 2, with a predetermined connecting regime.

The driving pulley 13, instead, is useful to transmit the motion from the crankshaft 2 to the axis of a driven pulley 17 which constitutes the input of the real gearbox.

The two driving pulleys 13 and the driven pulley 17 are toothed and they are connected by a synchronous belt 18 with a fixed transmission ratio. The side containments of the belt 18 are mounted on this driving pulley 13 in order to optimize the transmission performance (figure 10).

To this regard, a control lever 20 is provided to exert a pressure on the control plate 21, that is on the engagement button.

Therefore, upon starting in first speed, the control lever 20 is active, it pushes on the control plate 21 and thus on the bushing 11.

From the second speed on, the lever 20 moves away from the control plate 21 and it does not exert any pressure, in a not intervening position.

This implements the possibility of running at lower engine rotation regimes than those upon connecting the clutch 5, an impossible procedure on all systems with automatic centrifugal clutch, including CVT systems.

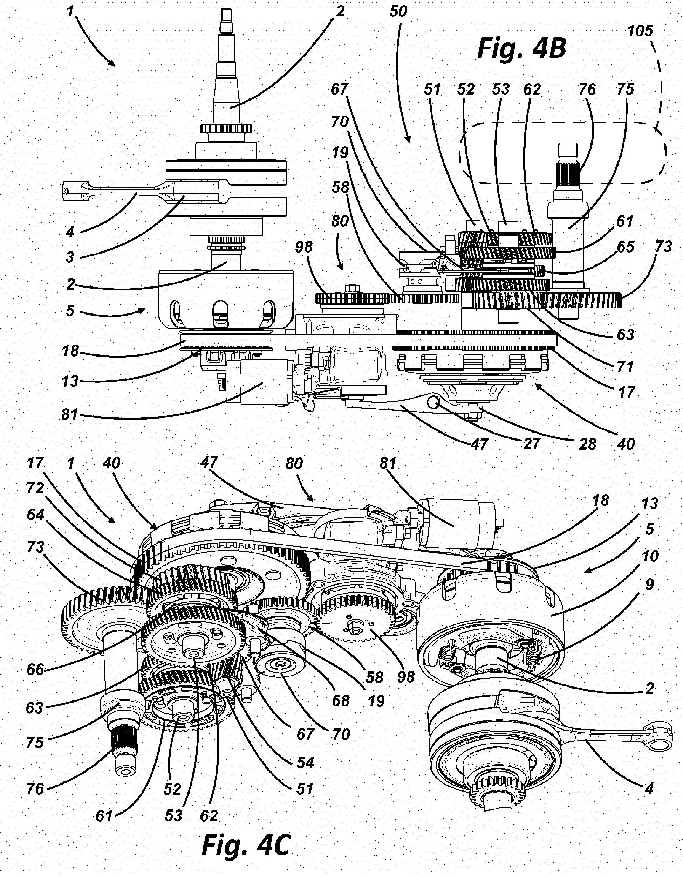

The lever 20, on this regard, has a pressing end 22 and it is oscillating with respect to a fulcrum 23 integral to a fixed portion of the transmission, thus to the container 109 (figure 4). The way in which the control lever 20 is actuated will be described hereinafter.

As explained previously, the belt 18 which is wound on the driving pulley 13 implements a synchronous connection, as it is toothed, and it requires the presence of a fixed tensioner 30, arranged in the lower branch of the belt 18 (figure 10A), arranged outside the ring formed by the belt 18 and pressing towards the inside of the ring itself.

This belt 18 is required for transmitting the motion from the axis of the crankshaft 2 to the axis of the gearbox input, placed in the area of the rear wheel 105.

The transmission ratio is fixed and the tensioner 30 has to keep a constant load under all use conditions.

As already highlighted previously, it is to be noted that it is not strictly necessary that the belt 18 has to be toothed, as there are so-called high transmission performance belts, that is substantially synchronous or almost synchronous, with or without tensioning device 30.

The latter (figure 10) has an eccentricity in the central fastening thereof: the tensioning device 30 has a fixed pin 31, integral to a fixed portion of the transmission, whereon a circular and eccentric supporting element 32 is assembled, which forms a circular periphery whereon a tensioner bearing 33 is assembled whereon, in turn, a pressing wheel 34 is assembled, positioned so as to exert a pressure between the smooth outer periphery thereof 35 on the smooth outer face 36 of the belt 18.

The fixed pin 31 is arranged eccentric with respect to the supporting element 32, so that, by rotating the latter during assembly, it is possible to move the wheel 34 by loading the belt 18.

The fixed pin 31 is of the screw type and, once tightened, it locks the supporting element 32 in the wished operating position thereof.

If released, the fixed pin 31 allows again the rotation of the supporting element 32 thus by moving away the pressing wheel 34 from the belt 18, by making easy, for example, the replacement thereof at the end of its life cycle. Then, it is sufficient to reposition the eccentric supporting element 32 in the maximum tensioning position thereof.

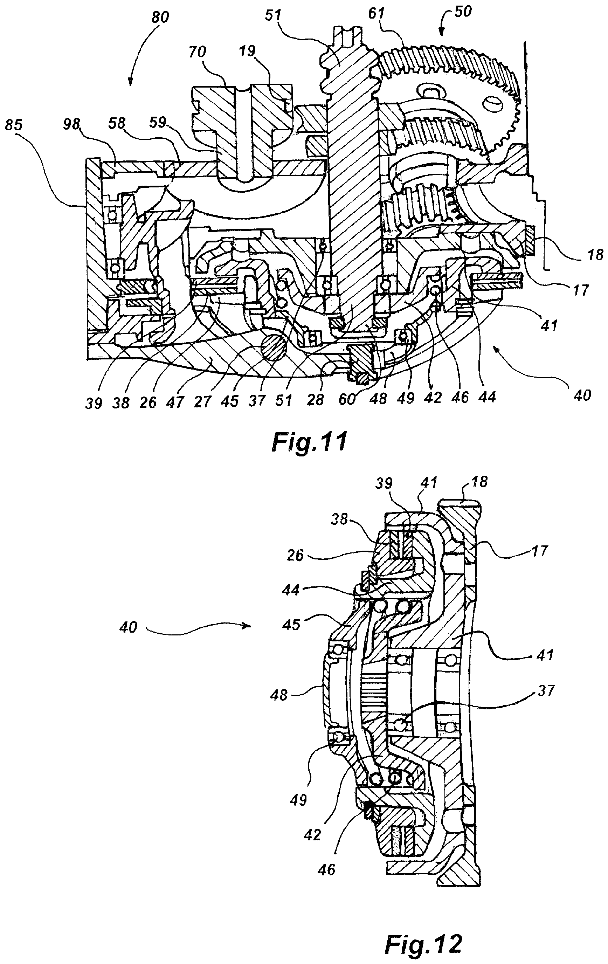

The driven pulley 17 is a toothed pulley too, or of other type depending upon the selected belt. It transmits the motion from the belt 18 to an input clutch 40 (figures 11 and 12) which performs materially the speed shifts.

The input clutch 40 is a clutch of the disc type and it comprises a third clutch housing 41 connected to the driven pulley 17. The input clutch 40 transmits the motion to a primary shaft of the gearbox 51 the distal end thereof, facing towards the cover 110 of the transmission 1, is connected to a clutch hub 42.

The third clutch housing 41 too is assembled on the primary shaft of the gearbox 51 by means of a pair of first clutch bearings 37, thanks thereto the rotation of the shaft 51 does not affect the clutch housing and vice versa.

Inside the housing 41 two clutch discs of the input clutch 40 are included: a more external first clutch disc 38 is connected to the housing 41, whereas a second clutch disc 39 is faced thereto more internally. It is connected and integral to an inner disc-pushing element 44, which surrounds and includes the clutch hub 42 thereto it is connected. The inner disc-pushing element acts axially on the clutch discs 38, 39 by opening and closing them.

A clutch cover 26 is connected to the first clutch disc 38, which cover encloses the space included in the third clutch housing 41 and supports the disc-pushing elements which will be described hereinafter.

To this regard, a clutch spring 46 is positioned between the clutch hub 42 and an inner disc-pushing element 45 covering and towering above the clutch hub 42. At the distal end of the primary shaft 51, thus at the rotation centre thereof, the outer disc-pushing element 45 comprises an actuation button 48 assembled on a second clutch bearing 49 which releases it from the rotation of the outer disc-pushing element 45.

Onto the actuation button 48 a pressure can be exerted which determines the disconnection of the input clutch 40.

The clutch discs 38, 39, usually, are closed due to the effect of the load of the clutch spring 46. The motion is then transmitted by the driven pulley 17 to the housing 41 and to the discs 38, 39, and therefrom to the two disc-pushing elements 44, 45 and to the clutch hub, and then to the primary shaft 51.

When a pressure is exerted on the actuation button 48, this pushes towards the distal end of the primary shaft 51 the outer disc-pushing element 45: through the inner disc-pushing element the second clutch disc 39 is moved away from the first clutch disc 38, thus by interrupting the kinematic continuity between third clutch housing 41 and clutch hub 42.

The pressure on the actuating button is obtained by means of a clutch lever 47 the clutch fulcrum 27 thereof is connected to a fixed portion of the transmission 1, that is to the container 109 or to the transmission cover 110, analogously to what described for the control lever 20.

The clutch lever 47 exerts a pressure through a pressing operating end 28, pressure which opposes to the load of the clutch spring 46 which defines the dragging load of the clutch 40.

The actuation of the clutch lever 47 will be described in greater detail here below in the present description.

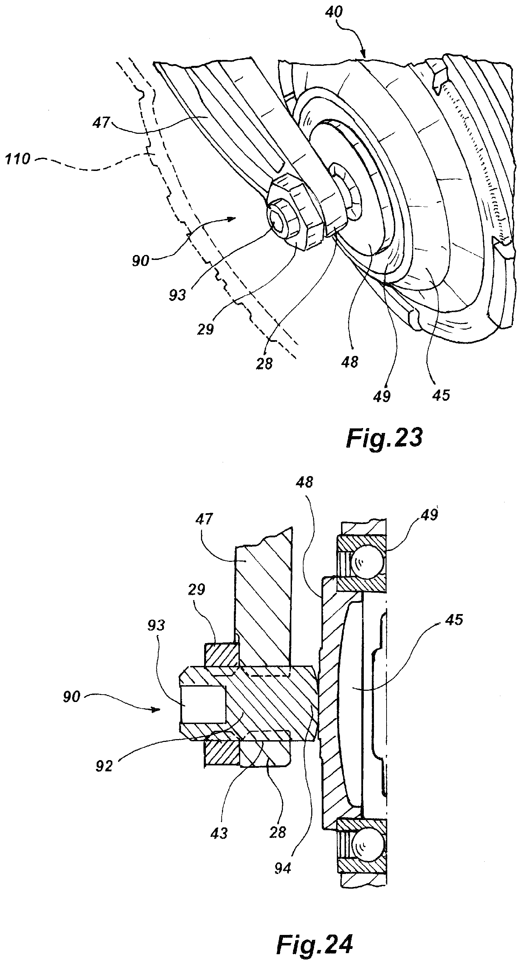

By referring to figures 23 and 24, on the input clutch 40, between it and the clutch lever 47, an adjustment of the clearance between the pressing operating end thereof 28 and the actuation button 48 connected to the outer disc-pushing element 45 is provided.

Such adjustment is obtained by means of a clearance-adjusting element 90 which allows to adjust an assembly clearance defined and in case adjustable in time for maintenance. Such adjustment allows to set to zero the assembly clearances, due to the tolerances and in time the possible wears which could modify the timing between actuator and clutch itself. Once adjusted this intervention point, it follows that the actions of the device actuating the speeds, which will be described hereinafter, will be always synchronized and phased in the same way and with the margins provided by the tolerance on the actuation clearance.

The clearance-adjusting element 90 provides a locking nut 29, assembled on said operating end 28 at a threaded hole 43, which is useful to assemble an adjusting screw 92 inserted in said nut 29 and in said hole 43.

The axial position of the adjusting screw 92 can be manoeuvred simply by acting, with a suitable wrench, on its head 93, so as to adjust the incidence of the operating end 28 by regulating the wished clearance.

In fact, by variating the axial position of the adjusting screw 92 the resting terminal thereof 94, interfering with the actuation button 48 assembled on the second clutch bearing 49 (figure 24) is translated.

The input clutch 40 is arranged for driving a mechanical speed transmission 50, the number of ratios thereof is not constraining. In the scheme which will be described hereinafter four ratios are provided.

The used gearbox scheme provides a primary axis and two secondary axes, and a final hub shaft, that is the wheel axis. This scheme can be the most suitable one for the type applying to a scooter, due to compactness in axial direction and versatility in managing ratios.

The gearbox 50 then comprises: a primary shaft 51, already mentioned with reference to the input clutch 40 which transmits to it the motion, with an input gearwheel 60 which is connected to the clutch hub 42; a first secondary shaft 52 which is assigned to the first and third speed by means of a first running toothed wheel 61 and a third running toothed wheel 63 with different diameters, with a respective first output gearwheel 71 for engaging with the hub shaft 75 connected to the rear driving wheel 105; a second secondary shaft 53, intended to the second and fourth speed with a second running toothed wheel 62 and a fourth running toothed wheel 64, with output gearwheel 72 for engaging with the hub shaft 75 connected to the rear driving wheel 105; and at last the already mentioned hub shaft 75 which supports an output toothed wheel 73 with big diameter, so as to implement an additional reduction in the transmission ratio at the hub shaft 75.

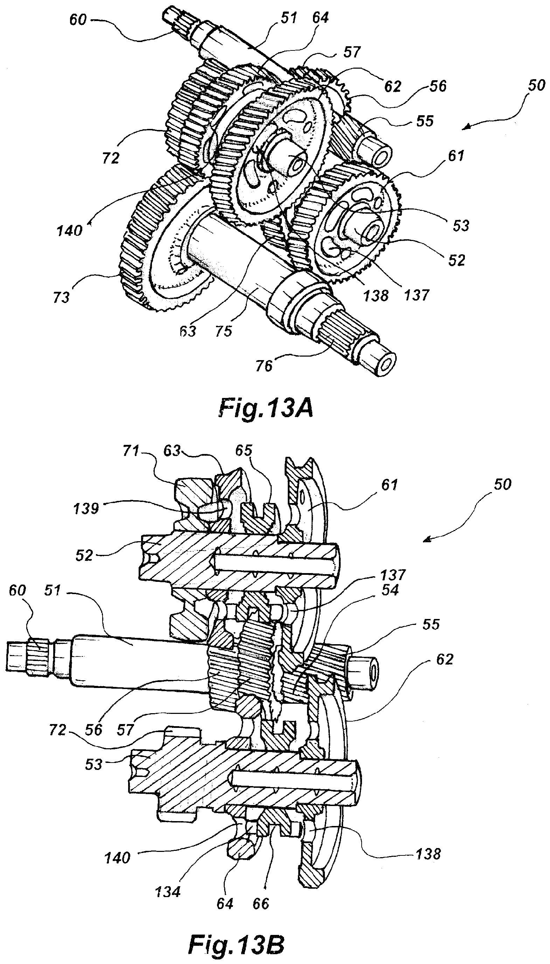

The above-mentioned toothed wheels 61, 62, 63 and 64 of the first, second, third and fourth speed, respectively, are assembled freely on the respective secondary shaft 52, 53 so that they can rotate with respect thereto, so that they can rotate with respect thereto, and they are respectively engaged with a first running pinion 54, a second running pinion 55, a third running pinion 56 and a fourth running pinion 57 arranged fixed and integral to the primary shaft 51, for transmitting the first speed (first toothed wheel 61 of the first secondary shaft 52 and first pinion 54 of the primary shaft 51), of the second speed (second toothed wheel 62 of the second secondary shaft 53 and second pinion 55 of the primary shaft 51), of the third speed (third toothed wheel 63 of the first secondary shaft 52 and third pinion 56 of the primary shaft 51) and of the fourth speed (fourth toothed wheel 64 of the second secondary shaft 53 and fourth pinion 57 of the primary shaft 51), with a transmission ratio decreasing from the first to the fourth speed due to the different diameters of the respective toothed wheels 61, 62, 63 and 64 of the two secondary shafts 52, 53 and of the pinions 54, 55, 56, and 57 of the primary shaft 51 (figure 13B) .

It is to be meant that, when they are not engaged, the toothed wheels 61, 62, 63 and 64 rotate dragged by the pinions 54, 55, 56, and 57 without transmitting the motion to their own secondary shafts 52, 53.

To this regard, respective first sliding coupling 65 and second sliding coupling 66 act on each secondary shaft 52, 53, the couplings being controlled in axial translation with respect to the secondary shafts 52, 53 by a corresponding first coupling fork 67 and second coupling fork 68.

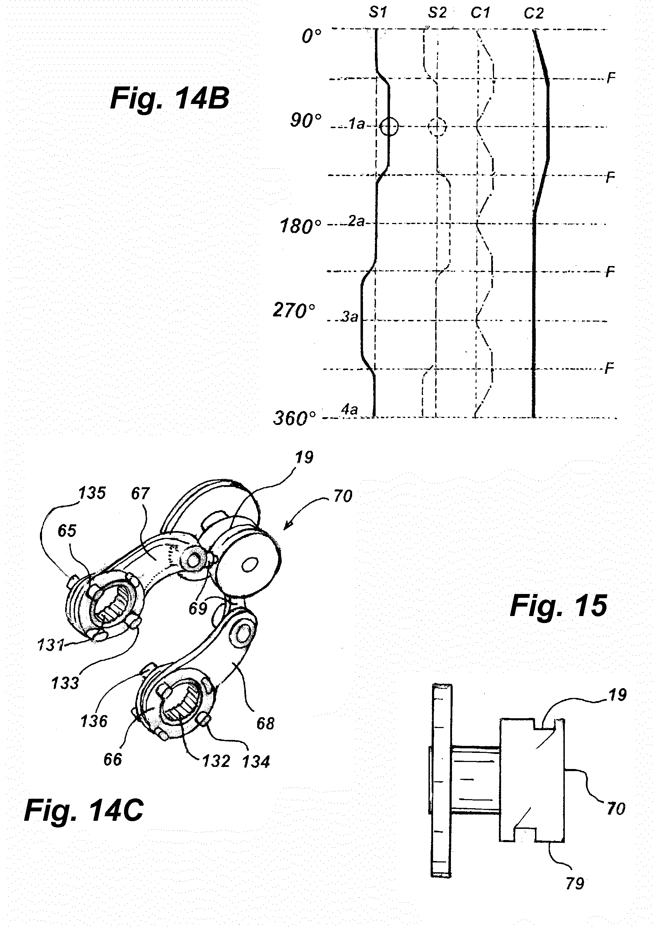

The sliding couplings 65, 66 are wheels which have, on their own respective inner crown placed around the respective secondary shaft 52, 53, a first spline coupling 131 and a second spline coupling 132 (figure 14C), respectively, in engagement with corresponding splines formed on the respective secondary shaft 52, 53. It is to be meant that said sliding couplings 65, 66 are free to rotate with respect to their coupling forks 67, 68.

The coupling forks 67, 68 are equipped with a cam transferring end 69 which are manoeuvred by means of a desmodromic drum 70 having a cylindrical surface 79 whereon one single desmodromic track 19 is formed.

The first sliding coupling 65 has first coupling pins 133 and second coupling pins 134 on the opposite sides thereof, projecting in axial direction respectively in the direction of the first toothed wheel 61 and of the third toothed wheel 63.

Analogously, the second sliding coupling 66 has third coupling pins 135 and fourth coupling pins 136 on the opposite sides thereof, projecting in axial direction respectively in direction of the second toothed wheel 62 and of the fourth toothed wheel 64.

With the axial sliding motion of the respective sliding couplings 65, 66 the pins 133, 134, 135 and 136 are intended to engage in the toothed wheels 61, 62, 63 and 64 thereto they are facing, the latter wheels having first coupling recesses 137, second coupling recesses 138, third coupling recesses 139 and fourth coupling recesses 140, respectively.

According to the herein described operation principle, the cam follower ends 69 of the coupling forks 67, 68 are constrained to follow the path defined by the track 19 implemented in the desmodromic drum 70, during the rotation thereof.

The actuation of the desmodromic drum 70, which rotates by an angular amount varying depending upon the speed to be selected, leads to a translation in axial direction of the forks 67, 68.

Each one of the two forks 67, 68 is connected to a selector element 65, 66, one per each secondary shaft of the gearbox which in turn is keyed to its own shaft by means of a grooved profile 131, 132. The adoption of a coupling with grooved profile allows to transmit the rotary motion and at the same time it allows the translation in axial direction of the selector element.

Each selector element on each face is equipped with projections, in particular four, suitably shaped to insert in corresponding recesses, suitably implemented on the toothed wheels assembled on the two secondary shafts of the gearbox, divided as follows: I and III speed on one shaft, II and IV on another one.

Each time, depending upon the selected speed, the selector element will move on one side or on another one. Upon each gearwheel shift, both selector elements will move by engaging or disengaging the responsible speed.

For example, in the speed passage from the I^{st} to the II^{nd} ratio, the selector element 65 placed on the first one of the two secondary shafts of the gearbox will move from the engagement position to the neutral one, at the same time the selector element 66 assembled on the second secondary shaft of the gearbox will move from the neutral position to the engagement position, by keying the toothed wheel 62 related to the II^{nd} speed to its own secondary shaft, that is the projections of the selector element will enter the recesses implemented on the toothed wheel of the II^{nd} speed.

Since, as said, the actuation of the selectors is contemporary and specular, it is possible to implement a desmodromic drum equipped with one single track capable of actuating all four speeds. All this to the advantage of the simplicity of the layout of the solution and of the implementation inexpensiveness.

It is to be noted that the coupling forks 67, 68 are identical between them and with symmetrical sides, they are rotated one with respect the other one by 180°, with a greater construction simplicity. Even the sliding couplings 65, 66 are equal therebetween.

The profile of the desmodromic track 19 is represented in figure 14B: S1 designates the representation of the track 19 from the point of view of the first coupling fork 67 acting on the first secondary shaft 52, and S2 designates the representation of the track 19 from the point of view of the second coupling fork 68 acting on the second secondary shaft 53.

C1 and C2 respectively, designate the cams' profiles which will be described hereinafter with greater details, controlling the clutch lever 47 and the control lever 20, respectively 20.

1a, 2a, 3a and 4a designate the speed engagement from the first one to the fourth one, F designates an idle status, wherein the transmission of the motion from the driven pulley 17 to the primary shaft 51 does not occur, through the synchronizing device 40 (figure 14B).

The track paths S1 and S2 are formed, in the present embodiment example, by one single peripheral track 19 which is divided into fourth tracts, each one with a width of 90°.

It then comprises two central opposite tracts, which follow a neutral periphery, and two opposite tracts staggered therebetween and with respect to the two central tracts, still with a peripheral course. Such tracts are connected therebetween by respective ramps.

In particular, each ramp comprises an ascending tract, a linear tract extending from a maximum point of the ascending tract, and a descending tract extending from the linear tract, wherein the ascending tract, the linear tract and the descending tract define a substantially trapezoidal profile.

From the tracks S1 and S2 the translations of the sliding couplings 65, 66 with respect to the respective secondary shafts 52, 53, determining the speed engagement, are deduced. The engagement of each speed is alternated by an idle status.

By referring to figure 14B, the first sliding coupling 65 and the respective first coupling fork 67 are translated axially when the corresponding cam follower end 69 moves in the staggered tracts of the track 19 which moves it in the direction of the first and the third toothed wheel 61, 63. On the contrary, when this cam follower end 69 is in the central tracts the first secondary shaft 52 does not transmit the motion.

Analogously, when the second sliding coupling 66 and the respective second coupling fork 68 are translated axially, the corresponding cam follower end 69 moves in the staggered tracts of the track 19 which moves it in the direction of the second and the fourth toothed wheel 62, 64. When this cam follower end 69, instead, is in the central tracts, the second secondary shaft 53 does not transmit the motion.

In this example, the cam follower ends 69 of the coupling forks 67, 68 are spaced apart by an arc of 90° on the desmodromic drum.

It is to be noted that the hub shaft 75, the two secondary shafts 52, 53 and the primary shaft 51 have axes parallel therebetween, grouped at the rear wheel 105.

Even the rotation axis of the desmodromic drum 70 is parallel to the axes of the previously mentioned shafts.

As it will be described in more details hereinafter it is actuated by an actuator 80 which will be described hereinafter.

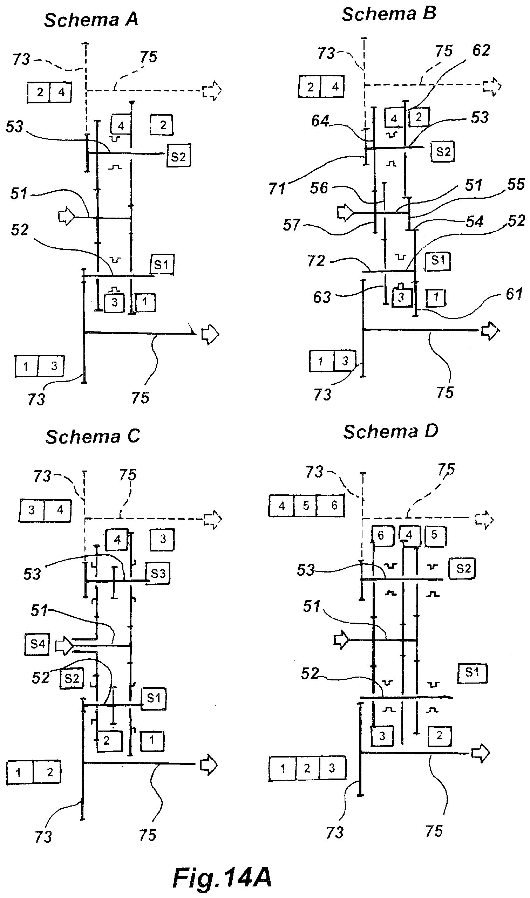

The used gearbox scheme provides some possible variants which will be described by referring to figure (see figure 14A).

Scheme A: four ratios with constant delta revolution ratio scale. It is the simplest and most compact solution: it provides two pairs of identical gearwheels between first secondary shaft and second secondary shaft, with two sliding couplings and coupling forks identical therebetween and one single track for defining the gearwheels on the desmodromic drum.

Scheme B: it is the solution shown in relation to the herein described embodiment example, it provides four ratios with progressive delta revolution ratio scale. The solution provides an identical pair of (first and second) gearwheels between first secondary shaft and second secondary shaft; two sliding couplings and two coupling forks identical therebetween and one single track for defining the gearwheels on the desmodromic drum.

Scheme C: solution with four ratios with constant delta revolutions and double clutch: this possible variant provides the use of a double clutch for shifting speed, which can be useful for passing between gearwheels without torque holes from one gearwheel to the other one. It provides due sliding couplings and two coupling forks identical therebetween and two distinct tracks implemented on the cylindrical surface of one single desmodromic drum.

Scheme D: solution with six progressive delta revolution ratios. This variant provides the adoption of six gearwheels. The same scheme can be proposed with constant or progressive delta revolution ratios.

As it clearly results from the scheme of actuations, due to the effect of the previously described geometry the two tracks of the secondary shafts (S1 and S2) result to be identical but staggered by 90°, this thanks to the used gearbox scheme. Therefore, by positioning the two coupling forks 67, 68 on a desmodromic track 19 staggered by 90° of the desmodromic drum 70, the possibility is obtained of having the two coupling forks 67, 68 equal therebetween and one single track on the desmodromic drum 70, with a higher constructive convenience.

The electromechanical actuator 80 has the purpose of defining, for each gearwheel shifting procedure, the opening of the rear clutch by means of the dedicated clutch lever 47, the movement of the two coupling forks 67, 68, by disengaging the ongoing gearwheel and by engaging the subsequent or the previous one, the re-closing of the clutch 40. Moreover, the actuator 80 is arranged to actuate the control lever 20 of the front centrifugal clutch 5 in the first speed. In this way, by using one single rotating electric engine, all these procedures are synchronized.

The electromechanical actuator 80 comprises a rotating electric motor 81, suitably fed by means of a control unit in order to make the motor axis to rotate according to both rotation directions. It is to be noted that the rotation axis of the electric motor is perpendicular to the axes of the primary 51, secondary 52 and 53 and hub 75 shafts.

On the rotative output of the electric motor 81 a pair of gearwheels 82, 83 is provided for reducing the transmission ratio outgoing from the motor, gearwheels with parallel axes, controlling a first actuator shaft 84 by means of an engagement of irreversible type allowing a greater precision and less influence of the clearances. The opposite ends of the actuator shaft 84 are supported by first actuator bearings 95. The axis of the first actuator shaft 84, too, is perpendicular to the axes of the primary 51, secondary 52 and 53 and hub 75 shafts, and this allows a reduction in the overall dimensions.

The first actuator shaft 84 is engaged to an actuator pinion 96 which controls, with a suitable reduction ratio, a second actuator shaft 85 perpendicular to the previous one and then it is parallel to the axes of the primary 51, secondary 52 and 53 and hub 75 shafts.

It extends on both sides of the actuator pinion 96 to control both the previously described desmodromic drum 70 and a cam set which actuates the clutch 47 and control 20 levers, with a pair of second actuator bearings 97 arranged on the side of the cam set.

The desmodromic drum 70 is on the side of the transmission 1 corresponding to the internal combustion engine and to the rear wheel; said cam system, together with said levers 20, 47, is on the side of the transmission 1 covered by the cover 110, wherein there is the synchronizer device 40 too.

The desmodromic drum 70 is controlled by a first actuator toothed wheel 98 which is keyed directly on the second actuator shaft 85; it is engaged to a second actuator toothed wheel 58 positioned between the actuator 80 and the gearbox 50, which controls directly in rotation a third actuator shaft 59 fastened to the base of the desmodromic drum 80 which thus is suitably rotated.

In the present example, the transmission ratio between the second and the third actuator shaft 85, 59 e 1:1, thus a rotation angle of the first (or of the second) actuator wheel 98 of 90° corresponds to a rotation angle of 90° of the desmodromic drum 70 and then a gearwheel shifting (figure 14B). This in case of a four-speed gearbox.

Therefore, the engagement of a precise gearwheel corresponds to each position of the first actuator toothed wheel 98 staggered by 90°. To this regard, then, it is possible to provide a feedback signal indicating the engaged gearwheel, determined by the rotation of the actuator 80.

Therefore, the first actuator toothed wheel 98 comprises a plurality of magnets 119 N and S, in particular four magnets (two per polarity) arranged alternated and spaced apart on a single periphery of an arc of 90°.

It is to be meant that, in a three-speed solution, three magnets could be sufficient. The magnets 119 N and S are arranged on the side of the wheel 98 wherein it is connected to the second actuator shaft 85.

On this side, inside an actuator casing 99 extending for the whole extension of the second actuator shaft 85, there is a detection board 120 which comprises a pair of Hall sensors 121, arranged on a periphery corresponding to that of the magnets 119, and separated by an arc of 90°.

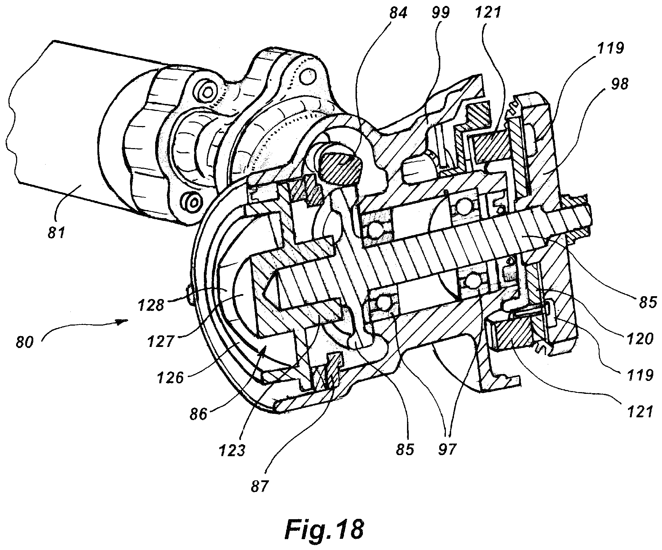

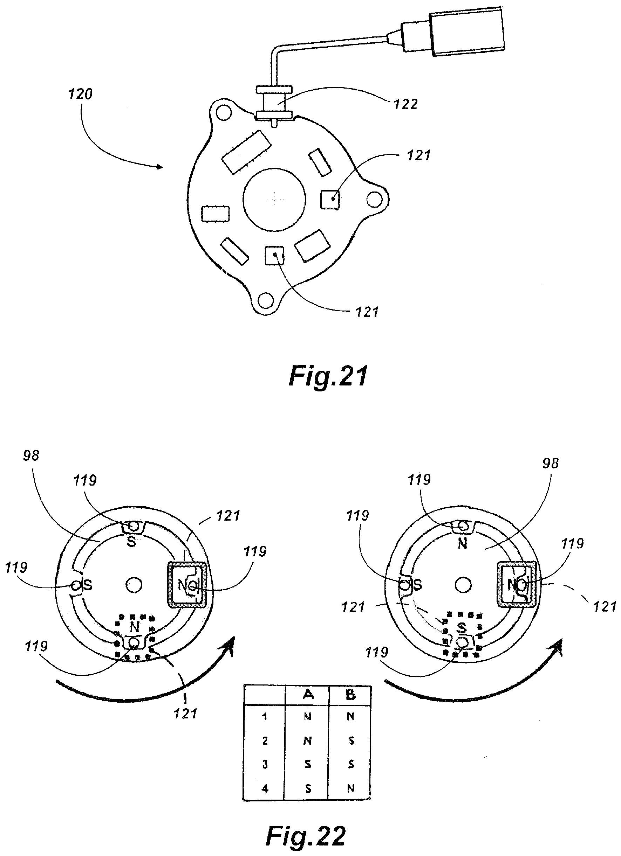

The actuator casing 99 (figure 18) is integral to the container of the transmission 109, as well as the board 120, which is connected to a control unit, which receives said feedback signal, by means of a connector 122 (figure 22). The board 120 comprises even other chips which carry out other functions assigned thereto.

The Hall sensors 121 are capable of detecting the polarities of the magnets of the first actuator toothed wheel 85, as each one thereof produces a peak signal with different polarity according to the polarity of the magnet 119 which passes nearby. By translating the signal which corresponds to N with 0 and the signal which corresponds to S with 1 (or vice versa), the pair of sensors 121 provides a binary signal according to the table of figure 22 (N-N; N-S; S-S, S-N) which as a whole can assume four distinct values, each one thereof will correspond to a speed.

In this way, which is wholly passive and it depends only upon the rotation of the cam actuator of a synchronizer, it is possible generating a signal representing the engaged gearwheel, which could be used for any purpose, in particular it could provide an indication of the really engaged gearwheel to one or more control units.

On the other side of the actuator pinion 84, on the end of the second actuator shaft 85 there is a cam set 86 which comprises a first cam 87 formed on the periphery of a first cam disc 88 arranged adjacent to the actuator pinion 84.

The first cam 87 is fixed both radially and axially, that is it is immobile with respect to the actuator casing 99 thereto it is constrained.

The cam profile of such first cam 87 has four peaks and four valleys, each one spaced apart by 90°, the valleys corresponding to a respective speed from the first to the fourth, thereto the magnets 119 of the first actuator toothed wheel 98 will equally correspond; the peaks, as it will be seen shortly, instead, correspond to the idle positions F (figure14B) .

The cam set 86 further comprises a cam follower 89 having a cam follower bushing 123 put on the top of the second actuator shaft 85, which is constrained thereto from the rotational point of view, but it is axially mobile therealong thanks to one or more not represented axial ribs, which form a prismatic pair.

The cam follower 89 further comprises a second cam disc 126 having two opposite faces, one faced towards the first cam 87 and having a cam profile analogous to the one of the first cam 87, but it is specular, that is it has four peaks and four valleys each one spaced apart by 90°, the valleys corresponding to a respective speed from the first one to the fourth one, thereto the magnets 119 of the first actuator toothed wheel 98 will equally correspond; the peaks, as it will be seen shortly, instead correspond to the idle positions F (figure 14B).

Therefore, the cam follower 89 moves away from the actuator pinion 84 when it is necessary to obtain an idle status F by pressing at the same time the second actuation button 48 of the input clutch 40, to interrupt the transmission of the motion from the driven pulley 17 to the primary shaft 51, and by acting on the sliding couplings 65, 66 of the gearbox 50 through the rotation of the desmodromic drum 70.

Analogously, the cam follower 89 approaches to the actuator pinion 84 when any gearwheel is engaged, that is when the second actuation button 48 has not to be pressed to allow the transmission of the motion from the driven pulley 17 to the primary shaft 51.

In order to obtain this approaching or return it will be necessary to arrange a return mechanism of conventional type, for example on the clutch lever 47.

In order to obtain said pressure on the second actuation button 48, on the face of the second cam disc 126 opposite to the profile of the cam follower it has an actuating projection 127 which represents an extension of the second actuator shaft 85 but which is mobile with alternated motion in response to the interaction between first cam 87 and cam follower 89.

The actuating projection 127 acts directly on an actuation end 125 of the clutch lever 47, opposite to the second pressing end 28, by obtaining the oscillation of the clutch lever 47 upon each gearwheel shifting, to determine the idle status F and the gearwheel shifting driven through the desmodromic drum 70.

This oscillation is represented by the track C1 in figure 14B.

Moreover, on the face of the second cam disc 126 opposite to the profile of the cam follower the second cam disc 126 has an additional cam profile determining a second cam 128 on such face. Such profile has a projection corresponding to the engagement of the first speed and it acts on an actuation end 124 of the control lever 20 opposite to the first pressing end 24, by obtaining the oscillation of the control lever 20 which then could act on the first actuation button 16, acting as actuation button too, which allows the effective detachment of the centrifugal clutch 5 on the crankshaft 2, but only in the first speed, as previously described.

This oscillation is represented by the track C2 in figure 14B.

By referring to figures 25 to 29, a second embodiment example of transmission according to the invention, of semiautomatic type, will be described hereinafter. With respect to the previous example, equal or analogous portions will be designated with the same reference numeral.

Therefore, a semiautomatic transmission is designated as a whole with 1 and it comprises a crankshaft 2 which comprises a crank 3 thereto a connecting rod 4 is connected which receives the motion by a not represented piston; however, it is to be meant that such transmission could be applied even to several-cylinder engines.

The crankshaft 2 extends from both sides of the crank: in the direction opposite to the transmission the crankshaft will be connected, by way of example, to an electric engine-generator, in case but not exclusively for an operation of hybrid type, and to a cooling valve.

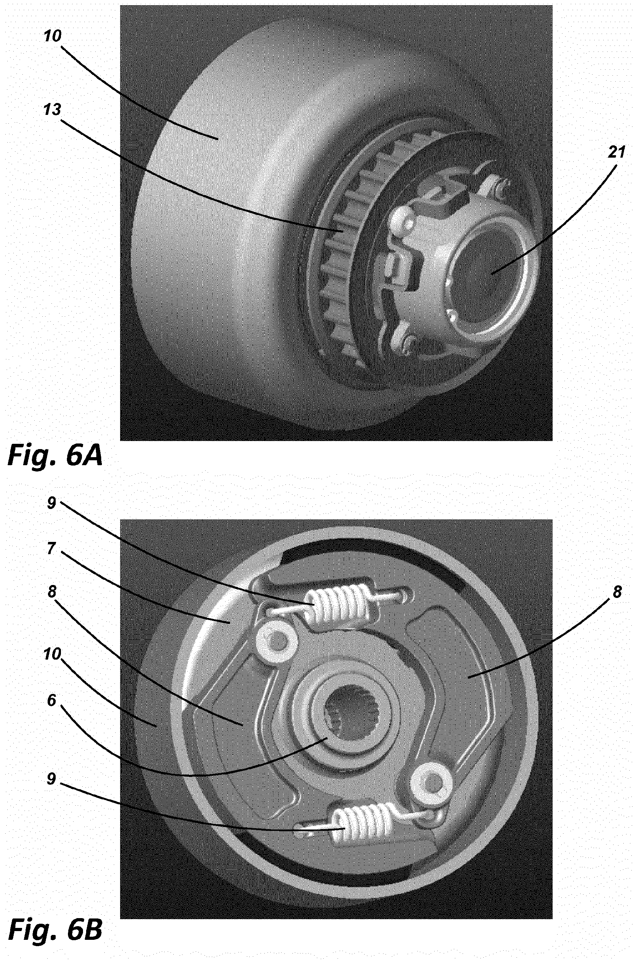

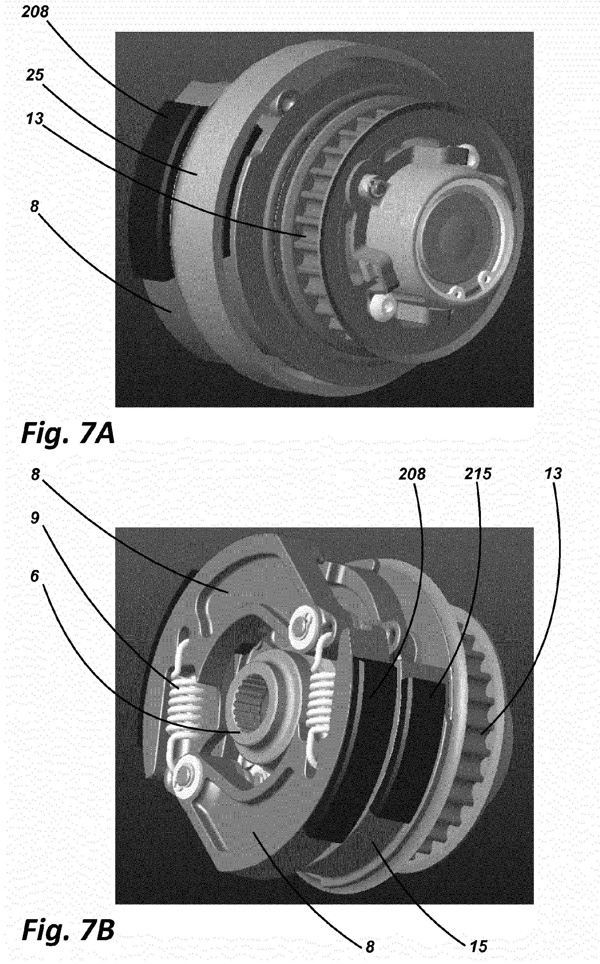

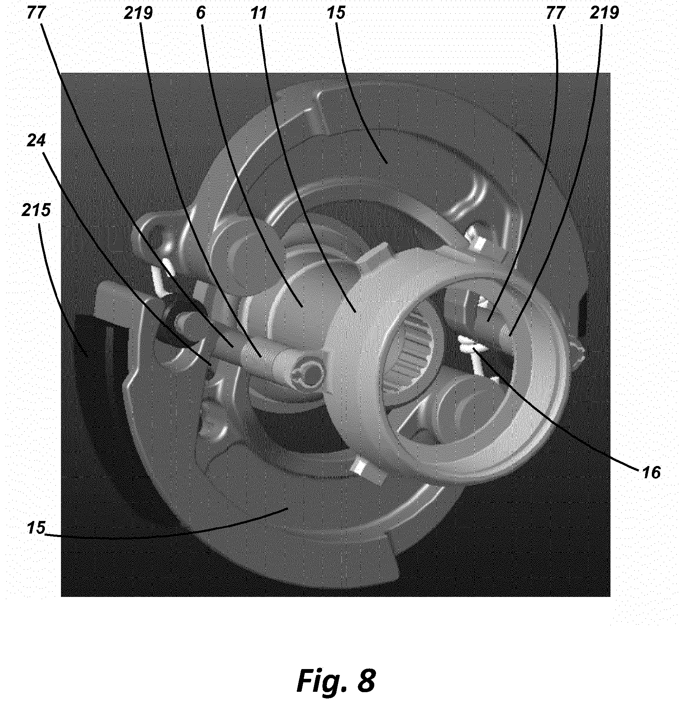

As in the preceding example, the crankshaft comprises a starting double centrifugal clutch system, designated as a whole with 5, which is useful to manage the starting of the vehicle from standstill and which corresponds to the one described with reference to figures 6A to 9, whereas the use of such clutch in the semiautomatic transmission of the present example is illustrated in figures 27A to 28B.

By referring to these last figures, the actuating set acting on the control plate 21, which will be described hereinafter, moves a suitably shaped front cam which in turn acts on a control lever 20, put on the fulcrum of the transmission cover which, with suitable ratio of arms, transfers the motion to the above-mentioned system for locking the centrifugal clutch.

The control plate 21 acts as first actuation button or engagement button for double clutch system 5.

The configuration is so that, when a pressure is not exerted on the control plate 21, the bushing 11 is pushed axially so as to allow the insertion of the locking pins 77 in the slot 24 of the second clutch masses 15, thus by preventing the second clutch housing 25 from being dragged thereby, although these masses, thanks to the elastic constant of the respective second clutch springs 16, can translate radially at a much lower regime than the connecting one of the first clutch housing 10 and of the first clutch masses 8.

In this way, the engagement of the first speed derives from the connecting regime provided for the first clutch housing 10 with the first clutch masses 8.

On the contrary, by leaving free the control plate 21 (figure 27A), the bushing 11 moves in opposite direction pushed by the return springs 219 assembled on the locking pins 77. In this way, a direct mechanical connection between the crankshaft 2, the second clutch housing 25, the bushing 11 and the driving pulley 13 and, under such operating condition, the driving pulley 13 is dragged into rotation by the crankshaft 2 when the instantaneous regime exceeds the connecting regime determined by the second clutch masses 15 and by the respective second clutch springs 16.

This operating state, as it will appear clear hereinafter in the present description, corresponds to the second, third and fourth speed, that is any higher speed than the first speed, wherein one wishes that the driving pulley 13 transmits the motion to the driving wheel 105.

On the contrary, if the control plate 21 is pressed (figure 27B), a state is obtained which corresponds to the first speed or to the state of idle position, the outer centrifugal clutch, with the first clutch housing 10, by determining the passage from one to the other one and vice versa based upon the rotation regime of the crankshaft 2, with a predetermined connecting regime.

The driving pulley 13 instead, is useful to transmit the motion from the crankshaft 2 to the axis of a driven pulley 17 which constitutes the input of the real gearbox.

As in the previous example, the two driving pulleys 13 and the driven pulley 17 are toothed and they are connected by a synchronous belt 18 with a fixed transmission ratio. The side containments of the belt 18 are mounted on this driving pulley 13 in order to optimize the transmission performance.

To this regard, a control lever 20 is again provided to exert a pressure on the control plate 21, that is on the engagement button.

Therefore, upon starting in first speed, the control lever 20 is active, it pushes on the control plate 21 and thus on the bushing 11.

From the second speed on, the lever 20 moves away from the control plate 21 and it does not exert any pressure, in a not intervening position.

This implements the possibility of running at lower engine rotation regimes than those upon connecting the clutch 5, an impossible procedure on all systems with automatic centrifugal clutch, including CVT systems.

The lever 20, to this regard, has a pressing end 22 and it is oscillating with respect to a control fulcrum 23 integral to a fixed portion of the transmission, thus to the container 109 (figure 4).

Around the control fulcrum 23 a spring 223 is arranged which has the purpose of keeping said pressing end 22 in continuous contact with the plate 21; to this regard it has a helical winding put on the control fulcrum 23 and an elastic arm extending in contact on the lever 20 in contact therewith and in direction of the pressing end 22.

The control lever 20 is actuated as described with reference to the preceding example.

The driven pulley 17 is a toothed pulley or of other type depending upon the selected belt. It transmits the motion from the belt 18 to an input clutch 40 (figure 29) which performs materially the speed shifts.

The input clutch 40 is a clutch of the disc type and it comprises a third clutch housing 41 connected to the driven pulley 17. The input clutch 40 transmits the motion to a primary shaft of the gearbox 51 the distal end thereof, facing towards the cover 110 of the transmission 1, is connected to a clutch hub 42.

The third clutch housing 41 too is assembled on the primary shaft of the gearbox 51 by means of a pair of first clutch bearings 37, thanks thereto the rotation of the shaft 51 does not affect the clutch housing and vice versa.

Inside the housing 41 two clutch discs of the input clutch 40 are included: a more external first clutch disc 38 is connected to the housing 41, whereas a second clutch disc 39 is faced thereto more internally. It is connected and integral to an inner disc-pushing element 44, which surrounds and includes the clutch hub 42 thereto it is connected. The inner disc-pushing element acts axially on the clutch discs 38, 39 by opening and closing them.

A clutch cover 26 is connected to the first clutch disc 38, which cover encloses the space included in the third clutch housing 41 and supports the disc-pushing elements which will be described hereinafter.

To this regard, a clutch spring 46 is positioned between the clutch hub 42 and an inner disc-pushing element 45 covering and towering above the clutch hub 42. At the distal end of the primary shaft 51, thus at the rotation centre thereof, the outer disc-pushing element 45 comprises an actuation button 48 assembled on a second clutch bearing 49 which releases it from the rotation of the outer disc-pushing element 45.

Onto the actuation button 48, by means of a clutch actuator 47, a pressure can be exerted which determines the disconnection of the input clutch 40.

The clutch discs 38, 39, usually, are closed due to the effect of the load of the clutch spring 46. The motion is then transmitted by the driven pulley 17 to the housing 41 and to the discs 38, 39, and therefrom to the two disc-pushing elements 44, 45 and to the clutch hub, and then to the primary shaft51.

When a pressure is exerted on the actuation button 48, this pushes towards the distal end of the primary shaft 51 the outer disc-pushing element 45: through the inner disc-pushing element the second clutch disc 39 is moved away from the first clutch disc 38, thus by interrupting the kinematic continuity between third clutch housing 41 and clutch hub 42.

The pressure on the actuating button 48 is obtained by a clutch actuator 47 constituted by an actuating shaft revolvingly fixed to the transmission cover 110, and controlled in rotation by a control unit based upon an actuating logic synchronized with the operation of the actuator 80 acting on the gearbox 50.

On its own distal end, the shaft which implements the clutch actuator 47 has a clutch lever 90 which, when the shaft is rotated by 90°, presses on the button 48 of the clutch 40.

The clutch lever 90 exerts a pressure which opposes to the load of the clutch spring 46 which defines the dragging load of the clutch 40.

The input clutch 40 is arranged for driving a mechanical speed transmission 50, the number of ratios is not constraining. The scheme which is used in this semiautomatic transmission is equal to the one described previously with reference to the automatic transmission of figure 3.

Moreover, the semiautomatic transmission of the present example comprises an electromechanical actuator 80 equal to the one described previously with reference to the automatic transmission of figure 3.

To the above-described synchronous transmissions a person skilled in the art, in order to satisfy additional and contingent needs, could introduce several additional modifications and variants, all however comprised within the protection scope of the present invention, as defined by the enclosed claims.

## Claims

1. A synchronous transmission (1) to be used aboard a motorcycle (100) for transmitting the motion generated by an engine (106) to a driving wheel (105), between a crankshaft (2) and hub shaft (75), comprising:
• a clutch set assembled on said crankshaft (2);
• a transmission wheel revolvingly coupled to said crankshaft (2) connected to the hub shaft (75) by means of a kinematic chain,
• wherein said clutch set comprises:
• a clutch element (5) for the automatic engagement of the first speed, revolvingly coupled to said crankshaft (2);
o a first centrifugal clutch (10,7,8) associated to said clutch element (5);
o a second centrifugal clutch (25,15,16) associated to said clutch element;
said first centrifugal clutch (10,7,8) being arranged on the crankshaft so as to engage said clutch element (5) upon reaching or exceeding a first rotation regime (N₁) of the crankshaft (2), and said second centrifugal clutch (25,15,16) being arranged on the crankshaft (2) so as to engage said clutch element (5) upon reaching or exceeding a second rotation regime (N₂) of the crankshaft (2); said second rotation regime (N₂) being lower than said first rotation regime (N₁);
• a selection set (11,22,77) of said second centrifugal clutch (25,15,16) which comprises at least a locking element (77) and which results to be configured to pass selectively from:
o a first configuration wherein said locking element (77) is engaged with said second centrifugal clutch so as to lock radially said second centrifugal clutch, by preventing the same to engage said clutch element (5), to
o a second configuration wherein said locking element (77) is disengaged from said second centrifugal clutch so as to allow the operation of the same.

2. The synchronous transmission (1) according to claim 1, wherein said clutch element (5) comprises a first housing and second housing (10, 25), in particular assembled into one another.

3. The synchronous transmission (1) according to claim 1, wherein the first rotation engine (N₁) is comprised between 4000 and 4500 revolutions per minute, and the second rotation regime (N₂) is comprised between 2000 and 2500 revolutions per minute.

4. The synchronous transmission (1) according to claim 1, wherein the passage between the first configuration and the second configuration takes place as feedback to a control signal, depending upon the number of engine revolutions and/or speed.

5. The synchronous transmission (1) according to claim 1, wherein said clutch element comprises:
• the first centrifugal clutch comprising the first clutch housing (10) whereon respective first clutch masses (7) act kept by first clutch springs (8);
• the second centrifugal clutch comprising the second clutch housing (25) integral to said first clutch housing (10), whereon respective second clutch masses (15) act kept by second clutch springs (16);
• a bushing (11) sliding axially along the crankshaft (2) and dragged in rotation by said first clutch housing (10), which in turn comprises a control plate (21), the pressure thereof determines the translation of the bushing (11), locking pins (77) being arranged on the control plate (21) apt to interfere with said second clutch masses (15) to inhibit the operation of the second clutch, wherein the locking pins (77) are provided with respective return springs (219) which, once the pressure of the control plate (21) has stopped, guarantees the return of the bushing (11) and of the locking pins (77) in a position not interfering with said second clutch masses (15),
said bushing (11) being integral with the driving pulley (13) to drag it in rotation, the clutch masses (7, 15) and/or the respective clutch masses (8, 16) of the two clutches being suitably sized so as to act at significantly different rotation regimes.

6. The synchronous transmission (1) according to claim 5, comprising:
• a control lever (20), movable from an active position, which corresponds to the first speed, to a not active position, which corresponds to any other speed, and vice versa, which has a pressing end (22), acting on said control plate (21), oscillating with respect a fulcrum (23) integral to a fixed portion of the transmission.

7. The synchronous transmission (1) according to claim 5, wherein said control plate (21) is positioned at the distal end of the crankshaft (2), said pressing end (22) of the control lever (20) acting in pressure on the control plate (21) by causing the interference between locking pins (77) and second clutch masses (15).

8. The synchronous transmission (1) according to claim 5, wherein the second clutch housing (25) has its own cavity arranged in opposite direction with respect to the first clutch housing (10), thus implementing therebetween a closed spaced which includes the sliding bushing (11) and the second clutch masses (15).

9. The synchronous transmission (1) according to claim 5, wherein the bushing (11) comprises the pair of the locking pins (77) dragged in rotation thereby, which interfere each one with a suitable slot (24) implemented in each second suitably shaped clutch mass (15).

10. The synchronous transmission (1) according to claim 5, wherein in each locking pin (77) there is a return spring (19) which compresses in the active phase, by making feedback on the surface of the driving pulley (13) and extends, as far as going back to resting condition, once the pressure on the control plate (21) has stopped.

11. The synchronous transmission (1) according to claim 1, wherein said clutch element comprises:
• the first clutch comprising the first clutch housing (10) whereon respective first clutch masses (7) act kept by first clutch springs (8);
• the second clutch comprising the second clutch housing (25) integral to said first clutch housing (10), whereon respective second clutch masses (15) act kept by second clutch springs (16);
• the bushing (11) axially sliding along the crankshaft (2) and dragged in rotation by said first clutch housing (10), which has a control plate (21), the pressure thereof determines the translation of the bushing (11), and locking pins (77) capable of interfering with said second clutch masses (15) to inhibit the operation of the second clutch and provided with respective return springs (219) which, once the pressure of the control plate (21) has stopped, guarantees the return of the bushing (11) and of the locking pins (77) in a position of not interference with said second clutch masses (15),
said bushing (11) being integral to the driving pulley (13) to drag it into rotation, the clutch masses (7, 15) and/or the respective clutch springs (8, 16) of the two clutches being suitably sized so that the rotation regime of the crankshaft (2) thereat the first clutch is activated is higher than rotation regime of the crankshaft (2) thereat the second clutch is activated,
• an actuator (80) acting on a gearbox (50) of the transmission, thereto a control lever (20) is associated, movable from an active position, which corresponds to the first speed, to a not active position, which corresponds to any other speed, and vice versa, which has a pressing end (22), acting on said control plate (21), oscillating with respect to a fulcrum (23) integral to a fixed portion of the transmission.

12. The synchronous transmission (1) according to claim 11, wherein said control plate (21) is positioned at the distal end of the crankshaft (2), said pressing end (22) of the control lever (20) acting in pressure on the control plate (21) by causing the interference between locking pins (77) and second clutch masses (15).

13. The synchronous transmission (1) according to claim 11, wherein the second clutch housing (25) has its own cavity arranged in opposite direction with respect to the first clutch housing (10), thus implementing therebetween a closed space including the sliding bushing (11) and the second clutch masses (15).

14. The synchronous transmission (1) according to claim 11, wherein the bushing (11) comprises the pair of the locking pins (77) dragged in rotation thereby, which interfere each one with a suitable slot (24) implemented in each suitably shaped second clutch mass (15).

15. The synchronous transmission (1) according to claim 11, wherein on each locking pin (77) there is a return spring (219) which compress in the active phase, by making feedback on the surface of the driving pulley (13) and extending as far as going back to resting condition, once the pressure on the control plate (21) has stopped.

16. The synchronous transmission (1) according to claim 11, wherein said actuator (80) is arranged to define, for each speed shift procedure, the shifting of two coupling forks (67, 68), by disengaging the current speed and by engaging the subsequent or the previous one.

17. The synchronous transmission (1) according to claim 16, wherein the actuator (80) comprises a pulley control including a wire (81), a pulley wheel (82) which controls in rotation an actuation shaft (85) whereon first actuator toothed wheel (98) is keyed on the opposite side of the transmission (1) with respect to said control lever (20), said first actuator toothed wheel (98) being arranged for rotating a desmodromic drum (70) which causes the shifting of said coupling forks (67, 68).

18. The synchronous transmission (1) according to claim 17, which comprises a second actuator toothed wheel (58) positioned between the actuator 80 and the gearbox (50), which controls directly in rotation an additional actuator shaft (59) fixed at the basis of the desmodromic drum (70) which thus is suitably rotated, with a transmission ratio between the first and the second actuator shaft (85, 59) of 1:1.

19. The synchronous transmission (1) according to claim 11, wherein said actuator (80), at the end of the actuator shaft (85) faced towards the transmission cover (110), comprises a disc-like shaped cam (123), with a cam profile on its periphery, with a projection which corresponds to the engagement of the first speed and it acts on an actuating end (124) of the control lever (20) opposed with respect to the first pressing end (22).

20. A motorcycle (100) comprising a propulsion unit (106) arranged in a position below a saddle (101), inside a chassis (102) extending from a front wheel (103) to a rear driving wheel (105), which comprises, between said propulsion unit (106) and said rear wheel (105) a transmission according to anyone of the preceding claims, received in a container (109) closed, on an exposed side of the motorcycle (100), by a cover (110).

## Patentansprüche

1. Synchrontransmission (1) zur Verwendung an Bord eines Motorrads (100) zur Übertragung der Bewegung, die durch einen Motor (106) erzeugt wird, an ein Antriebsrad (105) zwischen einer Kurbelwelle und einer Nabenwelle (75), mit:
einem Kupplungssatz, der auf der Kurbelwelle (2) zusammengesetzt ist,
einem Transmissionsrad, das drehend mit der Kurbelwelle (2) verbunden ist, die mit der Nabenwelle (75) mittels einer kinematischen Kette verbunden ist,
wobei der Kupplungssatz aufweist:
ein Kupplungselement (5) für den automatischen Eingriff der ersten Geschwindigkeit, das drehend mit der Kurbelwelle (2) verbunden ist,
eine erste Fliehkraftkupplung (10, 7, 8), die dem Kupplungselement (5) zugeordnet ist,
eine zweite Fliehkraftkupplung (25, 15, 16), die den Kupplungselement zugeordnet ist,
wobei die erste Fliehkraftkupplung (10, 7, 8) auf der Kurbelwelle angeordnet ist, um an dem Kupplungselement (5) bei Erreichen oder Überschreiten einer ersten Drehzahl (N₁) der Kurbelwelle anzugreifen, und die zweite Fliehkraftkupplung (25, 15, 16) auf der Kurbelwelle (2) angeordnet ist, um an dem Kupplungselement (5) beim Erreichen oder Überschreiten einer zweiten Drehzahl (N₂) der Kurbelwelle (2) anzugreifen,
wobei die zweite Drehzahl (N₂) geringer als die erste Drehzahl (N₁) ist,
einem Auswahlsatz (11, 22, 77) der zweiten Fliehkraftkupplung (25, 15, 16), der mindestens ein Sperrelement (77) aufweist und dazu führt, um ausgebildet zu sein, um selektiv zu passieren von:
einer ersten Konfiguration, in der das Sperrelement (77) mit der zweiten Fliehkraftkupplung in Eingriff steht, um so radial die zweite Fliehkraftkupplung zu sperren, und zwar durch Verhinderung das dieselbe an den Kupplungselement (5) angreift, zu
einer zweiten Konfiguration, in der das Sperrelement (77) außer Eingriff mit der zweiten Fliehkraftkupplung steht, um den Betrieb derselben zu ermöglichen.

2. Synchrontransmission (1) nach Anspruch 1, wobei das Kupplungselement (5) ein erstes Gehäuse und ein zweites Gehäuse (10, 25) aufweist, die insbesondere miteinander verbunden sind.

3. Synchrontransmission (1) nach Anspruch 1, wobei die erste Drehmaschine (N₁) zwischen 4000 und 4500 Umdrehungen/min liegt und die zweite Drehzahl (N₂) zwischen 2000 und 2500 Umdrehungen/min liegt.

4. Synchrontransmission (1) nach Anspruch 1, wobei der Übergang zwischen der ersten Konfiguration und der zweiten Konfiguration als Reaktion auf ein Steuersignal abhängig von der Motor-Drehzahl und/oder der Geschwindigkeit erfolgt.

5. Synchrontransmission (1) nach Anspruch 1, wobei das Kupplungselement aufweist:
die erste Fliehkraftkupplung mit dem ersten Kupplungsgehäuse (10), wobei jeweilige erste Kupplungsmassen (7) durch erste Kupplungsfedern (8) gehalten wirken,
die zweite Fliehkraftkupplung mit dem zweiten Kupplungsgehäuse (25), das integral mit dem ersten Kupplungsgehäuse (10) ist, wobei jeweilige zweite Kupplungsmassen (15) durch zweite Kupplungsfedern (16) gehalten wirken,
eine Hülse (11), die axial entlang der Kurbelwelle (2) gleitet und in Drehung durch das erste Kupplungsgehäuse (10) gezogen wird, das seinerseits eine Steuerplatte (21) aufweist, deren Druck die Verschiebung der Hülse (11) bestimmt, wobei Sperrstifte (77) auf der Steuerplatte (21) angeordnet sind, die geeignet sind, mit den zweiten Kupplungsmassen (15) zusammenzuwirken, um den Betrieb der zweiten Kupplung zu verhindern, wobei die Sperrstifte (77) mit jeweiligen Rückholfedern (219) versehen sind, die, sobald der Druck der Steuerplatte (21) beendet ist, die Rückführung der Hülse (11) und der Sperrstifte (77) in eine Position sicherstellen, die nicht mit den zweiten Kupplungsmassen (15) kollidiert,
wobei die Hülse (11) integral mit der Antriebsscheibe (13) ist, um sie in Drehung zu versetzen, wobei die Kupplungsmassen (7, 15) und/oder die jeweiligen Kupplungsmasse (8, 16) der beiden Kupplungen geeignet bemessen sind, um bei deutlich unterschiedlichen Drehzahlen zu wirken.

6. Synchrontransmission (1) nach Anspruch 5, mit:
einem Steuerhebel (20), der von einer aktiven Position, die einer ersten Geschwindigkeit entspricht, in eine inaktive Position, die jeder anderen Geschwindigkeit entspricht, und umgekehrt bewegbar ist, der ein Druckende (22) aufweist, das auf die Steuerplatte (21) wirkt, mit Bezug auf einen Drehpunkt (23) oszilliert, der integral zu einem festen Teil der Transmission ist.

7. Synchrontransmission (1) nach Anspruch 5, wobei die Steuerplatte (21) an dem distalen Ende der Kurbelwelle (2) angeordnet ist, wobei das Druckende (22 des Steuerhebels (20) mit Druck auf die Steuerplatte (21) durch Verursachung der Zusammenwirkung zwischen den Sperrstiften (77) und den zweiten Kupplungsmassen (15) wirkt.

8. Synchrontransmission (1) nach Anspruch 5, wobei das zweite Kupplungsgehäuse (25) seinen eigenen Hohlraum in entgegengesetzter Richtung mit Bezug auf das erste Kupplungsgehäuse (10) aufweist, wodurch dazwischen ein geschlossener Raum realisiert wird, der die Gleithülse (11) und die zweiten Kupplungsmassen (15) umfasst.

9. Synchrontransmission (1) nach Anspruch 5, wobei die Hülse (11) das Paar der Sperrstifte (77) aufweist, die dadurch in Drehung versetzt werden, die jeweils mit einem geeigneten Schlitz (24) zusammenwirken, der in jeder zweiten geeignet geformten Kupplungsmasse (15) realisiert ist.

10. Synchrontransmission (1) nach Anspruch 5, wobei in jedem Sperrstift (77) eine Rückholfeder (19) vorgesehen ist, die in der aktiven Phase komprimiert, und zwar durch Rückwirkung auf die Oberfläche der Antriebsscheibe (13), und sich zur Rückführung zu einem Ausgangszustand ausdehnt, sobald der Druck auf die Steuerplatte (21) beendet ist.

11. Synchrontransmission (1) nach Anspruch 1, wobei das Kupplungselement aufweist:
die erste Kupplung mit dem ersten Kupplungsgehäuse (10), wobei jeweilige erste Kupplungsmassen (7) durch erste Kupplungsfedern (8) wirkend gehalten werden,
die zweite Kupplung mit dem zweiten Kupplungsgehäuse (25), das integral mit dem ersten Kupplungsgehäuse (10) ist, wobei jeweilige zweite Kupplungsmassen (15) durch zweite Kupplungsfedern (16) wirkend gehalten werden,
die Hülse (11), die axial entlang der Kurbelwelle (2) gleitet und in Drehung durch das erste Kupplungsgehäuse (10) versetzt wird, das eine Steuerplatte (21) aufweist, deren Druck die Verschiebung der Hülse (11) bestimmt, und Sperrstifte (77), die mit den zweiten Kupplungsmassen (15) zusammenwirken können, um den Betrieb der zweiten Kupplung zu verhindern, und mit jeweiligen Rückholfedern (219) versehen sind, die, sobald der Druck der Steuerplatte (21) beendet ist, die Rückkehr der Hülse (11) und der Sperrstifte (77) in eine Position sicherstellen, die nicht mit den zweiten Kupplungsmassen (15) kollidiert,
wobei die Hülse (11) integral mit der Antriebsscheibe (13) ist, um sie in Drehung zu versetzen, wobei die Kupplungsmassen (7, 15) und/oder die jeweiligen Kupplungsfedern (8, 16) der beiden Kupplungen so geeignet bemessen sind, dass die Drehzahl der Kurbelwelle (2), bei der die erste Kupplung aktiviert wird, höher ist als die Drehzahl der Kurbelwelle (2), bei der die zweite Kupplung aktiviert wird,
einen Aktuator (80), der auf ein Getriebe (50) der Transmission wirkt, dem ein Steuerhebel (20) zugeordnet ist, der von einer aktiven Position, die einer ersten Geschwindigkeit entspricht, zu einer inaktiven Position bewegbar ist, die jeder anderen Geschwindigkeit entspricht, und umgekehrt, der ein Druckende (22) aufweist, das auf die Steuerplatte (21) wirkt, mit Bezug auf einen Drehpunkt (23) oszilliert, der integral zu einem fixierten Teil der Transmission ist.

12. Synchrontransmission (1) nach Anspruch 11, wobei die Steuerplatte (21) an dem distalen Ende der Kurbelwelle (2) angeordnet ist, wobei das Druckende (22) des Steuerhebels (20) mit Druck auf die Steuerplatte (21) durch Bewirkung der Zusammenwirkung zwischen den Sperrstiften (77) und den zweiten Kupplungsmassen (15) wirkt.

13. Synchrontransmission (1) nach Anspruch 11, wobei das zweite Kupplungsgehäuse (25) seinen eigenen Hohlraum aufweist, der in entgegengesetzter Richtung mit Bezug auf das erste Kupplungsgehäuse (10) angeordnet ist, wodurch dazwischen ein geschlossener Raum realisiert wird, der die Gleithülse (11) und die zweiten Kupplungsmassen (15) umfasst.

14. Synchrontransmission (1) nach Anspruch 11, wobei die Hülse (11) das Paar der Sperrstift (77) aufweist, die dadurch in Drehung versetzt werden, die jeweils mit einem geeigneten Schlitz (24) zusammenwirken, der in jeder geeignet geformten zweiten Kupplungsmasse (15) realisiert ist.

15. Synchrontransmission (1) nach Anspruch 11, wobei auf jedem Sperrstift (77) eine Rückholfeder (219) vorgesehen ist, die in der aktiven Phase durch Rückwirkung auf die Fläche der Antriebsscheibe (13) komprimiert, und bis zu einem Ausgangszustand expandiert, sobald der Druck auf die Steuerplatte (21) beendet ist.

16. Synchrontransmission (1) nach Anspruch 11, wobei der Aktuator (80) angeordnet ist, um für jeden Gangwechselvorgang die Verschiebung von zwei Kupplungszinken (67, 68) zu definieren, und zwar durch Lösen des momentanen Gangs und durch Einlegen des vorherigen oder des folgenden.

17. Synchrontransmission (1) nach Anspruch 16, wobei der Aktuator (80) eine Scheibensteuerung mit einem Kabel (81), ein Scheibenrad (82) aufweist, das in der Drehung eine Betätigungswelle (85) steuert, wobei ein erstes Aktuator-Zahnrad (98) auf der gegenüberliegenden Seite der Transmission (1) mit Bezug auf den Steuerhebel (20) kämmt, wobei das erste Aktuator-Zahnrad (98) zur Drehung einer desmodromischen Trommel (70) ausgebildet ist, die eine Verschiebung der Kupplungszinken (67, 68) bewirkt.

18. Synchrontransmission (1) nach Anspruch 17, mit einem zweiten Aktuator-Zahnrad (58), das zwischen dem Aktuator (80) und dem Getriebe (50) angeordnet ist, das direkt in Drehung eine zusätzliche Aktuator-Welle (59) steuert, die an der Basis der desmodromischen Trommel (70) fixiert ist, die somit in geeigneter Weise rotiert, wobei ein Übertragungsverhältnis zwischen der ersten und der zweiten Aktuator-Welle (85, 59) 1:1 beträgt.

19. Synchrontransmission (1) nach Anspruch 11, wobei der Aktuator (80) am Ende der Aktuator-Welle (85), die zu der Transmissionsabdeckung (110) weist, einen scheibenförmigen Nocken (123) mit einem Nockenprofil an seinem Umfang mit einem Vorsprung aufweist, der mit dem Eingriff der ersten Geschwindigkeit entspricht und auf ein Betätigungsende (124) des Steuerhebels (20) wirkt, das mit Bezug auf das erste Druckende (22) entgegengesetzt ist.

20. Motorrad (100) mit einer Antriebseinheit (106), die in einer Position unterhalb eines Sattels (101) innerhalb eines Chassis (102) angeordnet ist, das es sich von einem Vorderrad (103) zu einem hinteren Antriebsrad (105) erstreckt, das zwischen der Antriebseinheit (106) und dem Hinterrad (105) eine Transmission nach einem der vorstehenden Ansprüche aufweist, die in einem Behälter (109) aufgenommen ist, der an einer freiliegenden Seite des Motorrades (100) durch eine Abdeckung (110) verschlossen ist.

## Revendications

1. Une transmission synchrone (1) destinée à être utilisée à bord d'une moto (100) pour transmettre le mouvement généré par un moteur (106) à une roue d'entraînement (105), entre un vilebrequin (2) et un arbre de moyeu (75), comprenant :
• un ensemble d'embrayage assemblé sur ledit vilebrequin (2) ;
• une roue de transmission couplée en rotation audit vilebrequin (2) connectée à l'arbre de moyeu (75) au moyen d'une chaîne cinématique,
• dans lequel ledit ensemble d'embrayage comprend :
• un élément d'embrayage (5) pour l'engagement automatique de la première vitesse, couplée en rotation audit vilebrequin (2) ;
o un premier embrayage centrifuge (10, 7, 8) associé audit élément d'embrayage (5) ;
o une deuxième embrayage centrifuge (25, 15, 16) associé audit élément d'embrayage ;
ledit premier embrayage centrifuge (10, 7, 8) étant agencé sur le vilebrequin de manière à engager ledit élément d'embrayage (5) lorsqu'un premier régime de rotation (N₁) du vilebrequin (2) est atteint ou dépassé, et ledit deuxième embrayage centrifuge (25, 15, 16) étant agencé sur le vilebrequin (2) de manière à engager ledit élément d'embrayage (5) lorsqu'un deuxième régime de rotation (N₂) du vilebrequin (2) est atteint ou dépassé ; ledit deuxième régime de rotation (N₂) étant inférieur audit premier régime de rotation (N₁) ;
• un ensemble de sélection (11, 22, 77) dudit deuxième embrayage centrifuge (25, 15, 16) qui comprend au moins un élément de verrouillage (77) et qui est configuré pour passer sélectivement de :
o une première configuration dans laquelle ledit élément de verrouillage (77) est engagé avec ledit deuxième embrayage centrifuge de manière à verrouiller radialement ledit deuxième embrayage centrifuge, en empêchant celle-ci d'engager ledit élément d'embrayage (5), à
o une deuxième configuration dans laquelle ledit élément de verrouillage (77) est dégagé dudit deuxième embrayage centrifuge de façon à permettre le fonctionnement de celui-ci.

2. La transmission synchrone (1) selon la revendication 1, dans laquelle ledit élément d'embrayage (5) comprend un premier logement et un second logement (10, 25), en particulier assemblés l'un dans l'autre.

3. La transmission synchrone (1) selon la revendication 1, dans laquelle le premier régime de rotation (N₁) est compris entre 4000 et 4500 tours par minute et le deuxième régime de rotation (N₂) est compris entre 2000 et 2500 tours par minute.

4. La transmission synchrone (1) selon la revendication 1, dans laquelle le passage entre la première configuration et la deuxième configuration a lieu en réponse à un signal de commande, en fonction du nombre de tours du moteur et/ou de la vitesse.

5. La transmission asynchrone (1) selon la revendication 1, dans laquelle ledit élément d'embrayage comprend :
• le premier embrayage centrifuge comprenant le premier logement d'embrayage (10) sur lequel des premières masses d'embrayage (7) respectives sont maintenues par des premiers ressorts d'embrayage (8) ;
• le deuxième embrayage centrifuge comprenant le deuxième logement d'embrayage (25) d'un seul tenant avec ledit premier logement d'embrayage (10), sur lequel des deuxièmes masses d'embrayage (15) respectives sont maintenues par des deuxièmes ressorts d'embrayage (16) ;
• une douille (11) coulissant axialement le long du vilebrequin (2) et entraînée en rotation par ledit premier logement d'embrayage (10), qui comprend à son tour une plaque de commande (21), dont la pression détermine la translation de la douille (11), des tiges de verrouillage (77) étant agencées sur la plaque de commande (21) et étant aptes à interférer avec lesdits deuxièmes masses d'embrayage (15) pour inhiber le fonctionnement du deuxième embrayage, lesdites tiges de verrouillage (77) étant prévues avec des ressorts de rappel (219) respectifs, qui, une fois que la pression de la plaque de commande (21) a cessé, garantissent le retour de la douille (11) et des tiges de verrouillage (77) dans une position n'interférant pas avec lesdites deuxièmes masses d'embrayage (15),
ladite douille (11) étant d'un seul tenant avec la poulie d'entraînement (13) pour l'entraîner en rotation, les masses d'embrayage (7, 15) et/ou les masses d'embrayage (8, 16) respectives des deux embrayages étant dimensionnées de manière appropriée pour agir à des régimes de rotation sensiblement différents.

6. La transmission synchrone (1) selon la revendication 5, comprenant :
• un levier de commande (20), mobile d'une position active, qui correspond à la première vitesse, à une position non active, qui correspond à n'importe qu'elle autre vitesse, et vice-versa, et qui a une extrémité de pression (22), agissant sur ladite plaque de commande (21), oscillant par rapport à un pivot (23) d'un seul tenant avec une partie fixe de la transmission.

7. La transmission synchrone (1) selon la revendication 5, dans laquelle ladite plaque de commande (21) est positionnée à l'extrémité distale du vilebrequin (2), ladite extrémité de pression (22) du levier de commande (20) agissant en exerçant une pression sur la plaque de commande (21) en causant l'interférence entre des tiges de verrouillage (77) et des deuxièmes masses d'embrayage (15).

8. La transmission synchrone (1) selon la revendication 5, dans laquelle le deuxième logement d'embrayage (25) a sa propre cavité agencée dans une direction opposée au premier logement d'embrayage (10), créant ainsi entre eux un espace fermé qui inclut la douille coulissante (11) et les deuxièmes masses d'embrayage (15).

9. La transmission synchrone (1) selon la revendication 5, dans laquelle la douille (11) comprend la paire de tiges de verrouillage (77) entraînées en rotation par celle-ci, lesquelles interfèrent chacune avec une fente appropriée (24) crée dans chaque deuxième masse d'embrayage (15) conformée de manière appropriée (15).

10. La transmission synchrone (1) selon la revendication 5, dans laquelle, dans chaque tige de verrouillage (77), il y a un ressort de rappel (19) qui se comprime dans la phase active, en effectuant un retour sur la surface de la poulie d'entraînement (13) et s'étend, jusqu'à retourner à son état de repos, une fois que la pression sur la plaque de commande (21) a cessé.

11. La transmission synchrone (1) selon la revendication 1, dans laquelle ledit élément d'embrayage comprend :
• le premier embrayage comprenant le premier logement d'embrayage (10) sur lequel des premières masses respectives (7) sont maintenues par des premiers ressorts d'embrayage (8) ;
• le deuxième embrayage comprend le deuxième logement d'embrayage (25) d'un seul tenant avec ledit premier logement d'embrayage (10), sur lequel des deuxièmes masses d'embrayage (15) respectives sont maintenues par des deuxièmes ressorts d'embrayage (16) ;
• la douille (11) coulissant axialement le long du vilebrequin (2) et étant entraînée en rotation par ledit premier logement d'embrayage (10), lequel a une plaque de commande (21) dont la pression détermine la translation de la douille (11), et des tiges de verrouillage (77) capables d'interférer avec lesdites deuxièmes masses d'embrayage (15) pour inhiber le fonction du deuxième embrayage et prévues avec des ressorts de rappel (219) respectifs, lequels, une fois que la pression de la plaque de commande (21) a cessé, garantissent le retour de la douille (11) et des tiges de verrouillage (7) dans une position n'interférant pas avec lesdits deuxièmes masses d'embrayage (15),
ladite douille (11) étant d'un seul tenant avec la poulie d'entraînement (13) pour l'entraîner en rotation, les masses d'embrayage (7, 15) et/ou les ressorts d'embrayage (8, 16) respectifs des deux embrayages étant dimensionnés de manière appropriée de façon à ce que le régime de rotation du vilebrequin (2) auquel le premier embrayage est activé soit supérieur au régime de rotation du vilebrequin (2) auquel le deuxième embrayage est activé,
• un actuateur (80) agissant sur une boîte de vitesses (50) de la transmission auquel un levier de commande (20) est associé, mobile d'une position active, qui correspond à la première vitesse, à une position non active, qui correspond à n'importe quelle autre vitesse, et vice-versa, et a une extrémité de pression (22) agissant sur ladite plaque de commande (21), oscillant autour d'un pivot (23) d'un seul tenant avec une partie fixe de la transmission.

12. La transmission synchrone (1) selon la revendication 11, dans laquelle ladite plaque de commande (21) est positionnée à l'extrémité distale du vilebrequin (2), ladite extrémité de pression (22) du levier de commande (20) exerçant une pression sur la plaque de commande (21) en causant l'interférence entre des tiges de verrouillage (77) et des deuxièmes masses d'embrayage (15).

13. La transmission synchrone (1) selon la revendication 11, dans laquelle le deuxième logement de verrouillage (25) a sa propre cavité agencée dans la direction opposée au premier logement (10), créant ainsi un espace fermé incluant la douille coulissante (11) les deuxièmes masses d'embrayage (15).

14. La transmission synchrone (1) selon la revendication 11, dans lequel la douille (11) comprend la paire de tiges de verrouillage (77) entraînée en rotation par celle-ci, lesquelles interfèrent chacune avec une fente appropriée (24) réalisée dans chaque deuxième masse d'embrayage (15) conformée de manière appropriée.

15. La transmission synchrone (1) selon la revendication 11, dans laquelle sur chaque tige de verrouillage (77), il y a un ressort de rappel (219) qui se comprime dans la phase active, en effectuant un retour sur la surface de la poulie d'entraînement (13) et en s'étendant jusqu'à retourner à son état de repos, une fois que la pression sur la plaque de commande (21) a cessé.

16. La transmission synchrone (1) selon la revendication 11, dans laquelle ledit actionneur (80) est agencé pour définir pour chaque opération de changement de vitesse, le déplacement de deux fourches de couplage (67, 68), en dégageant la vitesse courante et en engament la suivante ou la précédente.

17. La transmission asynchrone (1) selon la revendication 16, dans laquelle l'actionneur (80) comprend une commande de poulie incluant un fil (81), une roue de poulie (82) qui entraîne en rotation l'arbre d'actionnement (85) sur lequel une première roue dentée d'actionnement (98) est clavetée du côté de la transmission (1) opposé au levier de commande (20), ladite première roue dentée d'actionnement (98) étant agencée pour faire tourner un tambour desmodromique (70) qui provoque le déplacement desdites fourches de couplage (67, 68).

18. La transmission synchrone (1) selon la revendication 17, laquelle comprend une deuxième roue dentée d'actionnement (58) positionnée entre l'actionneur (80) et la boîte de vitesses (50) et qui entraîne directement en rotation un arbre d'actionnement supplémentaire (59) fixé à la base du tambour desmodromique (70), lequel est ainsi entraîné de manière appropriée en rotation, avec un rapport de transmission entre les premier et deuxième arbres d'actionnement (85, 59) de 1:1.

19. La transmission synchrone (1) selon la revendication 11, dans laquelle ledit actionneur (80), à l'extrémité de l'arbre d'actionnement (85) tournée vers le couvercle de transmission (110), comprend une came conformée en forme de disque (123), avec un profil de came sur sa périphérie, avec une protubérance qui correspond à l'engagement de la première vitesse et agit sur une extrémité d'actionnement (124) du levier de commande (20) opposée à la première extrémité de pression (22).

20. Un moteur (100) comprenant une unité de propulsion (106) agencée à un emplacement situé sous une selle (101), à l'intérieur d'un châssis (102) s'étendant d'une roue avant (103) à une roue arrière d'entraînement (105), et comprenant, entre ladite unité de propulsion (106) et ladite roue arrière (105), une transmission selon l'une quelconque des revendications précédentes, logée dans un conteneur (109) fermé, sur un côté exposé du moteur (100), par un couvercle (110).
